(19) Europäisches Patentamt

European Patent Office

Office européen des brevets

(11) Veröffentlichungsnummer: **0 332 102 B1**

(12) **EUROPÄISCHE PATENTSCHRIFT**

(45) Veröffentlichungstag der Patentschrift: **07.09.94**

(21) Anmeldenummer: **89103884.6**

(22) Anmeldetag: **06.03.89**

Die Akte enthält technische Angaben, die nach dem Eingang der Anmeldung eingereicht wurden und die nicht in dieser Patentschrift enthalten sind.

(51) Int. Cl.⁵: **C09C 1/02**, D21H 19/38, C09D 7/12, C08K 3/00

(54) **Pigment-Mischung für die Papierindustrie.**

(30) Priorität: **07.03.88 DE 3807407**

(43) Veröffentlichungstag der Anmeldung:
**13.09.89 Patentblatt 89/37**

(45) Bekanntmachung des Hinweises auf die
Patenterteilung:
**07.09.94 Patentblatt 94/36**

(84) Benannte Vertragsstaaten:
**AT BE CH DE ES FR GB GR IT LI LU NL SE**

(56) Entgegenhaltungen:
**FR-A- 2 418 263**

**DATABASE WPIL,NO87-332254,Derwent Publications Ltd, London,GB; JP-A-62238898 (MITSUBISHI PAPER) 19-10-87**

**DATABASE WPIL,NO87-225115,Derwent Publications, Ltd, London, GB; & JP-A-62149995 (MITSUBISHI PAPER) 03-07-87**

**DATABASE WPIL,NO87-139679,Derwent Publications Ltd, London, GB; & JP-A-62078296 (MITSUBISHI PAPER) 10-04-87**

**DATABASE WPIL, N0 84-273029, Derwent Publications Ltd, London, GB; & JP-A-59168071 (SANYO KASEI KK) 21-09-84**

(73) Patentinhaber: **Plüss-Staufer AG**

**CH-4665 Oftringen (CH)**

(72) Erfinder: **Kogler, Werner**
**Feldstr. 49**
**CH-4600 Olten (CH)**

(74) Vertreter: **Reinhard, Skuhra, Weise**
**Postfach 44 01 51**
**D-80750 München (DE)**

**Beschreibung**

Die vorliegende Anmeldung betrifft eine Pigment-Mischung, enthaltend Calciumcarbonat und weiterhin betrifft die Erfindung ein Verfahren zur Herstellung dieser Pigment-Mischung und deren vorzugsweise Verwendung in der Papierindustrie, insbesondere für Streichmassen für Tiefdruckpapiere und Rollen-Offset-Papiere, insbesondere für leichtgewichtige gestrichene Tiefdruck- und Rollen-Offset-Papiere (LWC-Papiere).

Gestrichene Papiere sind mit einer Masse gestrichen, die im wesentlichen ein Bindemittel und ein Pigment in Form eines mineralischen Füllstoffs enthält. Eine Beschreibung der Bestandteile von Papierbeschichtungsmaterialien und ihre Anwendung ist z.B. im Buch von James P. Casey "Pulp and Paper Chemistry and Technology" Kapitel XIX, Bd. III (1961) gegeben.

In der Drucktechnik sind im wesentlichen drei verschiedene Verfahren bekannt, nämlich der Buchdruck, der Offsetdruck und der Tiefdruck.

Der Buchdruck ist ein sogenanntes Hochdruckverfahren. Wie beim Stempel steht die zu druckende Fläche erhaben in der Druckform. Mittels Walze wird die erhabene Bildfläche eingefärbt. Bei diesem Druckverfahren wird auch gestrichenes Papier verwendet, das Kaolin oder Calciumcarbonat enthält.

Der Offsetdruck ist ein sogenanntes Flachdruckverfahren, d.h. die druckenden und nichtdruckenden Teile liegen in einer Ebene. Sie unterscheiden sich dadurch, daß die druckenden Teile Fett (d.h. Druckfarbe) annehmen und abgeben, Wasser jedoch abweisen, während die nichtdruckenden Teile Wasser festhalten, aber Fett (Farbe) abweisen. Der rotierende Druckzylinder passiert zuerst die wasserführende und dann die farbführende Walze. Er druckt jedoch nicht direkt auf das Papier, sondern auf ein über einen Zylinder gespanntes Gummituch. Erst von diesem nimmt das Papier, mittels Zylinder gegen den Gummizylinder gedrückt, das Druckbild ab. Bei diesem Verfahren werden sowohl Kaolin als auch Calciumcarbonat als Streichpigmente verwendet.

Beim Tiefdruck liegen die druckenden Teile des Zylinders unter der polierten Oberfläche. Der Zylinder passiert zuerst die mit flüssiger Farbe gefüllte Wanne, dann den Rakel, ein Stahllineal, das die überschüssige Farbe wegnimmt, während die zum Druck bestimmte Farbe in Näpfchen solange festgehalten wird, bis diese von dem das Papier führenden Presseur überrollt und die Farbe dabei herausgesaugt wird.

Für den Tiefdruck wird als Streichpigment in der Praxis ganz überwiegend nur Kaolin verwendet. Die Verwendung von Kaolin als Streichpigment in Tiefdruckpapieren ist jedoch mit einer Reihe von Nachteilen verbunden, insbesondere
- Schlechtes rheologisches Verhalten; dadurch ist es nicht möglich, mit hohem Feststoffgehalt zu streichen, was hohe Energiekosten bei der Strichtrocknung bedingt.
- Unwirtschaftlich, da kostenungünstig.

Weiterhin wird nach dem Stande der Technik sogenannter "Superclay" als Streichpigment in Tiefdruckpapieren verwendet.

Bei Superclay handeit es sich um ein englisches Kaolin mit vergleichsweise grober Plättchenstruktur. Auf dem Markt sind zwei Qualitäten wie folgt:

Superclay M mit ca. 45 % < 2 $\mu$m Teilchen

Superclay F mit ca. 65 % < 2 $\mu$m Teilchen.

Beide Qualitäten werden für Tiefdruckstreichfarben anteilmäßig von 50 - 100 % (100 % Pigment als Basisberechnung in Streichfarben) gemischt mit anderen Kaolinen eingesetzt.

Als Nachteile für Superclay gelten:
- schlechtes rheologisches Verhalten bei schnellaufenden Streichmaschinen
- höherer Binderbedarf als feinere Kaoline
- nur geringerer Feststoffgehalt fahrbar
- geringe Glanzentwicklung.

Die Verwendung von Talkum als Streichpigment ist bereits untersucht worden. In Finnland wird z.B. Talkum als Füllstoff in der Papierherstellung bereits seit den sechziger Jahren verwendet. Talkum ähnelt in seiner chemischen Struktur etwas dem Kaolin. Kaolin ist ein plättchenförmiges Aluminiumsilikat, Talkum ist auch ein plättchenförmiges Pigment, jedoch Magnesiumsilikat. Auch weichen die wichtigsten physikalischen Eigenschaften des Talkums nicht wesentlich von denen des Kaolins ab.

Aber auch Talkum weist eine Reihe von Nachteilen bei Einsatz in Papierstreichmassen auf: Wegen seiner chemischen Struktur ist Talkum hydrophob, was die Benetzung der Pigmentfläche in Dispergierungen erschwert und was auch eine gute Entlüftung in Dispergierungen voraussetzt. Auch setzt Talkum einen neuen Typ von Bindemitteln und eine andere Fahrweise in der Streichmaschine im Vergleich zu Kaolin voraus, damit Wasserretention, Luftgehalt und Rheologie keine größeren Probleme verursachen.

Aufgrund dieser Nachteile wurde auch bereits versucht, eine Pigment-Mischung aus Kaolin und Talkum in Streichmassen für Tiefdruckpapiere und Rollen-Offset-Papiere einzusetzen (s. Tappi Journal, Band 68, Nr. 11, November 1985).

Für Tiefdruckpapiere bestehen die Mischungen aus 50 bis ca. 80 % Talkum und 50 - ca. 20 % feinem Kaolin mit 75 % < 2 $\mu$m Teilchengröße. Es werden hierzu Bindemittel auf Acrylatbasis verwendet. Hinzu kommt ein Netzmittel für Talkum auf der Basis schaumarmer Tenside bzw. Polyethylenglykole.

Besondere Nachteile dieser Pigmentmischung sind:
- schlechtes rheologisches Verhalten auf schnellaufenden Streichmaschinen
- nur geringerer Feststoffgehalt fahrbar (52 % anstelle von 58 %)
- Rutsch- und Gleiteigenschaften der Papiere in der Druckmaschine sind zu hoch und problematisch.

Weiterhin wurde versucht, Calciumcarbonat als einziges Streichpigment in LWC-Tiefdruckpapieren einzusetzen.

Aus der DE-A-33 16 949 ist ein solches Streichpigment in Form von Calciumcarbonat bekannt, das dadurch gekennzeichnet ist, daß es durch Vermahlen und/oder Klassifizierung nach Teilchengröße aufbereitet ist, und

a) 50 - 70 % an Teilchen kleiner als 1 $\mu$m,

b) weniger an 10 % an Teiichen kleiner 0,2 $\mu$m und

c) eine spezifische Oberfläche nach BET von kleiner als 10 m$^2$/g aufweist.

Dieses Streichpigment hat sich aber in der Praxis für die Verwendung im Tiefdruck nicht durchgesetzt, z.B. weil die Anzahl der "missing dots" gegenüber der vorliegenden Erfindung stark erhöht und der Glanz zu niedrig ist.

Darüber hinaus wird in der Literatur dem Fachmann sogar eindringlich davon abgeraten, Calciumcarbonat als Streichpigment in Tiefdruckpapieren zu verwenden, mit der Begründung, daß schlechte Druckresultate erzielt würden. Nur beispielsweise sei im folgenden auf zwei diesbezügliche Literaturstellen verwiesen:

1. "ECC International", Haus-Zeitschrift, 1981, "How developments in coating pigments affect paper printability" von Dr. Ken Beazley, Research and Development, Seiten 1 und 2:

In dieser Veröffentlichung ist wörtlich ausgeführt, daß eine der "Lebenstatsachen" darin bestehe, daß gemahlenes Calciumcarbonat ein schiechteres Streichpigment für Tiefdruckpapiere sei als Kaolin. Auf Seite 2 wird nochmals darauf hingewiesen, daß Calciumcarbonat schlechte Bedruckbarkeit ergibt.

2. Tappi Coatings Proceedings 1979: "Possibilities and Limitations of High Solids Colours", Seite 39:

Unter Punkt 4 "Zusammenfassung" Nr. 3 wird ausgeführt, daß die Druckqualität bei der Verwendung von gemahlenem Calciumcarbonat schlechter ist als bei der Verwendung von Kaolin bei gleicher und bei höherer Feststoffkonzentration.

Aus dem "Wochenblatt für Papierfabrikation", 107, Seiten 909 bis 914 (1979) Nr. 23/24 ist es bereits bekannt, Zusätze von 5 - 10 % Talkum zu Calciumcarbonat-Strichen zu verwenden, und zwar in Offsetpapieren.

Aus der JP-A-62-149995 ist ein Verfahren zur Beschichtung von Papier mit Zusammensetzungen bekannt, die wenigstens 20 Gew.% Calciumcarbonat und Talkum enthalten. Die mittlere Teilchengröße des Calciumcarbonats beträgt 0,4 - 2$\mu$m, die des Talkums 0,5 - 2$\mu$m. Das Talkum wird bevorzugt in einer Größenordnung von 5 - 90 Gew.% des Calciumcarbonats zugemischt. Die Vermahlung des Calciumcarbonats und des Talkums erfolgt gemeinsam. Eine Angabe über die Kornverteilungen des Talkums oder des Calciumcarbonats ist nicht enthalten. Der mittlere Durchmesser vermittelt jedoch keine Aussage über die tatsächliche Verteilung der Korngrößen.

Aus der JP-A-62-078296 ist eine Mischung aus Calciumcarbonat und Talkum bekannt, die als Papierbeschichtungsmasse einsetzbar ist. Das Calciumcarbonat weist eine mittlere Teilchengröße von 0,4 - 1$\mu$m, das Talkum eine mittlere Teilchengröße von 0,5 - 2$\mu$m auf. Das Mischungsverhältnis des Calciumcarbonats zum Talkum beträgt bevorzugt 100 : 5 bis 70 Gew.%. Die Pigmentmischung wird durch gemeinsame Vermahlung des Talkums und des Calciumcarbonats hergestellt. Angaben über die Kornverteilungen des Talkums oder des Calciumcarbonats sind dieser Druckschrift nicht zu entnehmen.

Schließlich ist es aus Tappi Journal, Band 68, Nr. 11, November 1985 ebenfalls bereits bekannt, eine Mischung von 85 % Talkum und 15 % Calciumcarbonat als Pigment-Mischung einzusetzen.

Die Vermahlung und Aufbereitung von Talkum alleine zu Slurries ist durch starke Hydrophobie des Produktes sehr schwierig. Deshalb hat man nur für eine bessere Aufbereitung zur Erzielung höheren Feststoffes in der Slurry dem Talkum 15 % CaCO$_3$ zugesetzt, nicht aber aus Gründen besserer Streichfarben. Diese Mischung mit 85 % Talkum und 15 % CaCO$_3$ ergibt hinsichtlich Papiereigenschaften im Tiefdruck keine Vorteile gegenüber der Talkum/Kaolinmischung. Es besteht sogar die Gefahr, daß durch den weiterhin niedrigen Feststoffgehalt in der Streichfarbe (der rheologisch positive Einfluß von CaCO$_3$ beginnt erst bei Zusätzen um 50 % und höher) der Papierglanz vermindert wird. Aufgrund zu hoher Rutsch- und Gleiteigenschaften dieser Strichoberfläche ist die Verarbeitbarkeit sehr problematisch.

Eine Aufgabe der vorliegenden Erfindung ist es, eine neue Pigmentmischung zu schaffen, insbesondere eine Pigment-Mischung zu schaffen, die es erlaubt, Streichmassen mit höherem Feststoffgehalt herzustellen, als dies mit Pigmenten oder Pigment-Mischungen nach dem Stande der Technik möglich ist.

Überraschenderweise wurde nunmehr nach jahrelangen, umfangreichen Reihenversuchen gefunden, daß entgegen der Meinung der Fachwelt doch Calciumcarbonat oder ein calciumcarbonathaltiges Pigment, insbesondere Dolomit unter bestimmten Voraussetzungen zur Lösung der vorstehenden Aufgabe eingesetzt werden kann.

Die Aufgabe wird erfindungsgemäß dadurch gelöst, daß die Pigmentmischung Calciumcarbonat und Talkum gleichzeitig enthält und diese Pigmentmischung dadurch gekennzeichnet ist, daß sie besteht aus 40 - 80 Gew.% Calciumcarbonat und/oder Dolomit und 20 - 60 Gew.% Talkum oder 20 - 60 Gew.% eines Talkum-Kaolin-Gemischs mit einem Anteil von 50 - 80 Gew.% Talkum in diesem Talkum-Kaolin-Gemisch oder 20 - 60 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

a) 98 - 100 % an Teilchen < 20 $\mu$m

b) 25 - 70 % an Teilchen < 2 $\mu$m

c) 12 - 40 % an Teilchen < 1 $\mu$m

d) 0,1- 12 % an Teilchen < 0,2 $\mu$m

jeweils eines entsprechenden sphärischen Durchmessers.

Die Erfindung betrifft auch ein Verfahren zur Herstellung eines die oben angegebene Pigmentmischung enthaltenden Slurrys sowie Verwendungen der Pigmentmischung. Weiterhin betrifft die Erfindung Streichmassen für Tiefdruckpapiere, die die oben näher bezeichnete erfindungsgemäße Pigmentmischung enthalten.

Es hat sich gezeigt, daß gerade die erfindungsgemäße Kombination der vorstehenden Merkmale, d.h. die Kombination der verwendeten Pigmente, kombiniert mit den ganz bestimmten gewichtsprozentualen Zusammensetzungen und diese wiederum kombiniert mit der ganz bestimmten Kornverteilung des Talkums zu hervorragenden, nichtvorhersehbaren guten Effekten bei der Anwendung führt.

Der Einfachheit halber werden im folgenden die drei Pigmente Talkum und/oder Kaolin und/oder Glimmer als "Hydrosilikate" bezeichnet, einfach um zu vermeiden, daß bei der folgenden Beschreibung immer wieder diese drei Ausdrücke wiederholt werden müssen.

Vorteilhaft ist eine Pigmentmischung aus 80 Gew.% Calciumcarbonat oder Dolomit und 20 Gew.% Talkum.

Weiterhin vorteilhaft sind Pigmentmischungen, die aus 70 Gew.% Calciumcarbonat bzw. Dolomit und 30 Gew.% eines oder mehrerer Hydrosilikate oder 50 - 60 Gew.% Calciumcarbonat bzw. Dolomit und 40 - 50 Gew.% eines oder mehrerer Hydrosilikate bestehen.

Besonders vorteilhaft sind Pigmentmischungen, die aus 52 Gew.% Calciumcarbonat bzw. Dolomit und 48 Gew.% eines oder mehrerer Hydrosilikate bestehen.

Weiterhin besonders vorteilhaft sind Pigmentmischungen, die aus 53 Gew.% Calciumcarbonat bzw. Dolomit und 47 Gew.% eines oder mehrerer Hydrosilikate oder 54 Gew.% Calciumcarbonat bzw. Dolomit und 46 Gew.% eines oder mehrerer Hydrosilikate bestehen.

Besonders vorteilhaft sind auch Pigmentmischungen, die aus 45 Gew.% Calciumcarbonat bzw. Dolomit und 55 Gew.% eines oder mehrerer Hydrosilikate oder aus 50 Gew.% Calciumcarbonat bzw. Dolomit und 50 Gew.% eines oder mehrerer Hydrosilikate bestehen.

Vorteilhaft ist eine Pigmentmischung, bei welcher das Calciumcarbonat oder der Dolomit folgende Kornverteilung aufweist

a) 95 - 100 % an Teilchen < 10 $\mu$m

b) 60 - 98 % an Teilchen < 2 $\mu$m

c) 15 - 80 % an Teilchen < 1 $\mu$m

d) 0,1 - 20 % an Teilchen < 0,2 $\mu$m,

jeweils eines entsprechenden sphärischen Durchmessers.

Vorteilhaft ist weiterhin eine Pigmentmischung, bei der das Calciumcarbonat oder der Dolomit folgende Kornverteilung aufweist

a) 95 - 100 % an Teilchen < 10 $\mu$m

b) 70 - 96 % an Teilchen < 2 $\mu$m

c) 20 - 75 % an Teilchen < 1 $\mu$m

d) 2 - 17 % an Teilchen < 0,2 $\mu$m,

jeweils eines entsprechenden sphärischen Durchmessers.

Besonders vorteilhaft ist eine Pigmentmischung, bei der das Calciumcarbonat oder der Dolomit folgende Kornverteilung aufweist

a) 96 - 100 % an Teilchen < 10 $\mu$m

b) 80 - 94 % an Teilchen < 2 $\mu$m

c) 35 - 70 % an Teilchen < 1 $\mu$m

d) 5 - 15 % an Teilchen < 0,2 $\mu$m,

jeweils eines entsprechenden sphärischen Durchmessers.

Besonders vorteilhaft ist eine Pigmentmischung, bei der das Calciumcarbonat oder der Dolomit folgende Kornverteilung aufweist

a) 97 - 100 % an Teilchen < 10 $\mu$m

b) 85 - 92 % an Teilchen < 2 $\mu$m

c) 45 - 65 % an Teilchen < 1 $\mu$m

d) 7 - 12 % an Teilchen < 0,2 $\mu$m,

jeweils eines entsprechenden sphärischen Durchmessers.

Ganz hervorragende Ergebnisse werden erzielt, wenn das Caiciumcarbonat oder der Dolomit folgende Kornverteilung aufweist

a) 99 % an Teilchen < 10 $\mu$m

b) 90 % an Teilchen < 2 $\mu$m

c) 60 % an Teilchen < 1 $\mu$m

d) 10 % an Teilchen < 0,2 $\mu$m,

jeweils eines entsprechenden sphärischen Durchmessers.

Besonders vorteilhaft ist eine Pigmentmischung, bei der der Glimmer folgende Kornverteilung aufweist

a) 98 - 100 % an Teilchen < 20 $\mu$m

b) 25 - 70 % an Teilchen < 2 $\mu$m

c) 12 - 40 % an Teilchen < 1 $\mu$m

d) 0,1- 12 % an Teilchen < 0,2 $\mu$m,

jeweils eines entsprechenden sphärischen Durchmessers.

Besonders vorteilhaft ist auch eine Pigmentmischung, bei der das Talkum folgende Kornverteilung aufweist

a) 98 - 100 % an Teilchen < 20 $\mu$m

b) 40 - 58 % an Teilchen < 2 $\mu$m

c) 20 - 34 % an Teilchen < 1 $\mu$m

d) 0,1- 5 % an Teiichen < 0,2 $\mu$m,

jeweils eines entsprechenden sphärischen Durchmessers.

Ganz hervorragende Eigenschaften werden erzielt, wenn das Talkum folgende Kornverteiiungen aufweist

a) 98 % an Teilchen < 20 $\mu$m

b) 50 % an Teilchen < 2 $\mu$m

c) 25 % an Teilchen < 1 $\mu$m

d) 2 % an Teilchen < 0,2 $\mu$m,

jeweils eines entsprechenden sphärischen Durchmessers.

Vorteilhaft ist auch eine Pigmentmentmischung, bei der das Kaolin folgende Kornverteilung aufweist

a) 90 - 100 % an Teilchen < 20 $\mu$m

b) 20 - 93 % an Teilchen < 2 $\mu$m

c) 10 - 60 % an Teilchen < 1 $\mu$m

d) 0,1- 10 % an Teilchen < 0,2 $\mu$m,

jeweils eines entsprechenden sphärischen Durchmessers.

Besonders vorteilhaft ist eine Pigmentmischung, bei der das Kaolin folgende Kornverteilung aufweist

a) 95 - 100 % an Teiichen < 20 $\mu$m

b) 55 - 85 % an Teilchen < 2 $\mu$m

c) 30 - 54 % an Teilchen < 1 $\mu$m

d) 2 - 7 % an Teilchen < 0,2 $\mu$m,

jeweils eines entsprechenden sphärischen Durchmessers.

Ganz hervorragende Eigenschaften werden erzielt, wenn das Kaolin folgende Korverteilung aufweist

a) 100 % an Teilchen < 20 $\mu$m

b) 80 % an Teilchen < 2 $\mu$m

c) 51 % an Teilchen < 1 $\mu$m

d) 4 % an Teilchen < 0,2 $\mu$m,

jeweils eines entsprechenden sphärischen Durchmessers.

EP 0 332 102 B1

Vorteilhafterweise können solche Calciumcarbonate bzw. Dolomite eingesetzt werden, die eine spezifische Oberfläche nach BET im Bereich von 3 - 18 m$^2$/g aufweisen.

Noch bessere Ergebnisse werden erzielt, wenn die spezifische Oberfläche nach BET des Calciumcarbonats bzw. des Dolomits im Bereich von 6- 15 m$^2$/g liegt. Noch bessere Ergebnisse werden erzielt, wenn die spezifische Oberfläche nach BET des Calciumcarbonats bzw. des Dolomits im Bereich von 8 - 12 m$^2$/g liegt. Hervorragende Eigenschaften werden erzielt, wenn die spezifische Oberfläche nach BET des Calciumcarbonats bzw. des Dolomits 10 m$^2$/g beträgt.

Vorteilhafterweise können solche Hydrosilikate eingesetzt werden, die eine spezifische Oberfläche nach BET im Bereich von 5 - 16 m$^2$/g aufweisen.

Noch bessere Ergebnisse werden erzielt, wenn die spezifische Oberfläche nach BET des Hydrosilikats im Bereich von 7 - 15 m$^2$/g liegt. Noch bessere Ergebnisse werden erzielt, wenn die spezifische Oberfläche nach BET des Hydrosilikats im Bereich von 10 - 13 m$^2$/g liegt. Hervorragende Eigenschaften werden erzielt, wenn die spezifische Oberfläche nach BET des Hydrosilikats 12 m$^2$/g beträgt.

Vorzugsweise Pigmentmischungen, die aus drei Mineralien bestehen, haben folgende Zusammensetzungen:

50 - 60 Gew.% Calciumcarbonat oder calciumcarbonathaltiges Mineral, insbesondere Dolomit,

20 - 30 Gew.% Talkum und

20 - 30 Gew.% Kaolin

oder

50 Gew.% Calciumcarbonat oder carbonathaltiges Mineral, insbesondere Dolomit

25 Gew.% Talkum und

25 Gew.% Kaolin.

Die erfindungsgemäße Pigmentmischung kann insbesondere für Tiefdruckpapiere verwendet werden. Letztere bestehen im wesentlichen aus einer Rohpapierbahn, auf welcher der Strich maschinell aufgebracht ist. Dieser Strich besteht im wesentlichen aus der erfindungsgemäßen Pigmentmischung und Wasser, Dispergiermittel, Netzmittel, Bindemittel und Hilfsmittel. Es liegt im Können des Durchschnittsfachmanns, mit Hilfe der erfindungsgemäßen Pigmentmischung zusammen mit den übrigen vorgenannten Bestandteile, das Tiefdruckpapier herzustellen. Analoges gilt für die Herstellung anderer technischer Produkte, in welchen die erfindungsgemäße Pigmentmischung einsetzbar ist, z.B. für andere Papiere, wie z.B. Rollen-Offset-Papiere.

Netzmittel, also Tenside (schaumarm) und Polyäthylenglykol sind dem Durchschnittsfachmann in der Papierindustrie durchaus ein Begriff. Solche Produkte sind unter Handelsnamen wie Plastigen T (BASF) oder PEG 4000, PEG 2000 (HOECHST) in der Papierindustrie schon seit Jahren im Einsatz.

Als Netzmittel (insbesondere wegen des Talkums) werden erfindungsgemäß vorzugsweise wäßrige Lösungen schaumarmer Tenside oder Polyäthylenglykole eingesetzt. Diese Netzmitteln sind dem Fachmann an sich bekannt.

Vorzugsweise werden 0,5 - 1,5 Gew.% Netzmitteln, bezogen auf den Gehalt an Hydrosilikat verwendet.

Als Dispergiermittel werden erfindungsgemäß vorzugsweise wäßrige Lösungen von Natrium-polyacrylat oder NH$_4$-polyacrylat mit einem Feststoffgehalt von ca. 40 Gew.% eingesetzt. Diese Dispergiermittel sind dem Fachmann an sich bekannt.

Vorzugsweise werden 0,1 - 0,3 Gew.% Dispergiermittel, bezogen auf den Gehalt an Hydrosilikat verwendet.

Vorzugsweise enthält die Pigmentmischung insbesondere bei Verwendung in Tiefdruckpapierstreichmassen noch zusätzlich 4 - 6 Gew.% Bindemittel, bezogen auf den Gehalt an der gesamten Pigmentmischung. Besonders vorteilhaft ist ein Zusatz eines acrylsäurehaltigen Mischpolymerisats (selbstverdickend) in einer Menge von 5 Gew.% bezogen auf den Gehalt an der gesamten Pigmentmischung.

Vorzugsweise enthält die Pigmentmischung insbesondere bei Verwendung in Tiefdruckpapierstreichmassen zusätzlich noch 0,1 - 1,2 Gew.% Natrium- oder Calciumstearat, bezogen auf den Gehalt an der gesamten Pigmentmischung, beispielsweise 0,8 Gew.% Calciumstearat oder 0,4 Gew.% Natriumstearat.

Die erfindungsgemäße Pigmentmischung kann vorzugsweise in einer Streichmasse für die Papierindustrie, besonders für Tiefdruckpapier, eingesetzt werden, wobei diese Streichmasse besteht aus 40-80 Gew.% Calciumcarbonat oder Dolomit, 20 - 60 Gew.% eines oder mehrerer Hydrosilikate und zusätzlich 4 - 6 Gew.% Bindemittel bezogen auf den Gehalt des Gesamtpigments, 0,1 - 0,3 Gew.% Dispergiermittel, bezogen auf den Gehalt an Hydrosilikat, 0,5 - 1,5 Gew.% Netzmitteln, bezogen auf den Gehalt an Hydrosilikat, 0,1 - 1,2 Gew.% Na- oder Castearat, bezogen auf den Gehalt des Gesamtpigments und soviel Wasser, daß ein Feststoffgehalt von 50 bis 65 Gew.% vorliegt.

Weiterhin kann die erfindungsgemäße Pigmentmischung vorteilhaft in Farben und Lacken sowie in Kunststoffen, jeweils insbesondere als Füllstoff verwendet werden.

6

Die Messung der spezifischen Oberfläche erfolgte nach BET entsprechend DIN 66132. Die bis zur Gewichtskonstanz bei 105° C vorgetrocknete Probe wurde im Thermostaten bei 250° C unter Stickstoffspülung während 1 Stunde ausgeheizt. Die Messung erfolgte mit Stickstoff ($N_2$) als Messgas unter Kühlung mit flüssigem Stickstoff.

Die in der vorstehend offenbarten Lösung der gestellten Aufgabe enthaltenen Fachausdrücke werden im folgenden unter Verwendung von der Fachwelt bekannten Begriffen und der Fachwelt ohne weiteres zugänglichen Literaturstellen definiert:

Alle in der vorliegenden Patentanmeldung genannten Feinheitsmerkmale der erfindungsgemäß hergestellten Produkte wurden durch Sedimentationsanalyse im Schwerefeld mit dem SEDIGRAPH 5000 der Firma Micromeritics, U.S.A., bestimmt. Dieses Gerät ist dem Durchschnittsfachmann bekannt und wird weltweit zur Bestimmung der Feinheit von Füllstoffen und Pigmenten verwendet. Die Messung erfolgte in einer 0,1 Gew.%igen, wäßrigen $Na_4P_2O_7$-Lösung. Die Dispergierung der Proben wurde mittels Schnellrührer und Ultraschall vorgenommen.

Die gemessene Teilchenverteilung wird auf dem X-Y-Schreiber als Durchgangs-Summenkurve dargestellt (s. z.B. Belger, P., Schweizerische Vereinigung der Lack- und Farben-Chemiker, XVII. FATIPEC-Kongreß, Lugano, 23. bis 28. September 1984), wobei auf der X-Achse der Teilchendurchmesser eines entsprechenden sphärischen Durchmessers und auf der Y-Achse der Anteil an Teilchen in Gew.% aufgetragen wird.

Die vorstehend definierten Feinheitsmerkmale wurden aus den mit dem vorstehend beschriebenen Verfahren erhaltenen Kurven abgelesen bzw. errechnet.

Zu den vorstehenden Definitionen siehe auch Belger, P. Schweizerische Vereinigung der Lack- und FarbeChemiker, XVII. FATIPIEC-Kongreß, Lugano, 23. bis 28. September 1984).

Im folgenden werden vorzugsweise Mischungsverhältnisse von Calciumcarbonat und Talkum und deren jeweilige Vorteile offenbart, wobei die Prozentangaben jeweils in Gewichtsprozent sind:

```
80 % CaCO₃        gute Rheologie, Feststoffgehalt
20 % Talkum       extrem hoch (65 Gew.%);


70 % CaCO₃        gute Rheologie, Feststoffgehalt
30 % Talkum       sehr hoch (63 Gew.%), Glanz

                  steigt, missing dots

                  vermindert;


60 % CaCO₃        gute Rheologie, Glanz steigt,
40 % Talkum       hoher Feststoffgehalt (61 Gew.%),
                  missing dots weiter vermindert;
50 % CaCO₃        Glanz steigt, guter Feststoffge-
50 % Talkum       halt (59 Gew.%), sehr wenige

                  missing dots.
```

Talkum ist ein Magnesiumsilikat mit im wesentlichen gleicher Zusammensetzung wie Speckstein, d.h. ein Phyllosilicat der Formel $Mg_3((OH)_2(Si_4O_{10}))$. Es bildet durchsichtige bis undurchsichtige, farblose Massen mit einer Dichte von 2,7 und einer Härte von 1, die aus blättrig-kristallinen, schuppigen, perlmuttglänzenden, glimmerartigen Aggregaten bestehen.

Eine typische Talkum-Masse, wie sie erfindungsgemäß vorzugsweise eingesetzt werden kann, besteht aus 96 - 98 Gew.% 3 $MgO.4SiO_2.H_2O$ und 2 - 4 Gew.% $MgCO_3$.

Erfindungsgemäß ist als Hydrosilikat weiterhin Kaolin verwendbar. Kaolin ist eine Sammelbezeichnung für hydratisierte Aluminiumsilicate (Tone), die wegen ihrer früheren Hauptverwendung auch Porzellanerden (china clays) genannt wurden. Hauptbestandteile sind der trikline Kaolinit und die monoklinen Dickit und Nakrit (allgemeine Formel $Al_2O_3 . 2SiO_2 . 2H_2O$ oder $Al_4(OH)_8[Si_4O_{10}]$) zusammen mit Montmorillonit und gelförmigen Tonerdesilikaten (Allophanen). Ganz reiner Kaolin der durch Schlämmen (vor allem Auswaschen des Sandes) aus Roh-Kaolin gewonnen wird, besteht fast nur noch aus Kaolinit mit 39,7% $Al_2O_3$, 46,4% $SiO_2$ und 13,9% $H_2O$; er bildet eine lockere, zerreibliche, weiße, mit Wasser plastisch werdende Masse aus mikrokristallinem Aluminiumsilicat.

Erfindungsgemäß können die unterschiedlichsten Calciumcarbonate bzw. calciumcarbonathaltigem Pigmente eingesetzt werden, insbesondere natürliche Calciumcarbonate in Form von Kreide, Marmor und Kalkstein aus den unterschiedlichsten Lagerstätten. Es kann auch präzipitiertes Calciumcarbonat eingesetzt werden. Im Rahmen der Erfindung kann auch vorteilhaft Dolomit eingesetzt werden.

Die erfindungsgemäß verwendeten Calciumcarbonate und der erfindungsgemäß verwendete Dolomit werden vorzugsweise dadurch hergestellt, daß sie zunächst in an sich bekannter Weise trocken vermahlen und anschließend durch Klassifizierung nach Teilchengröße mittels Windsichtung aufbereitet werden oder daß sie durch Naßvermahlung in an sich bekannter Weise hergestellt werden.

Die erfindungsgemäß verwendeten Hydrosilikate werden vorzugsweise in an sich bekannter Weise dadurch hergestellt, daß sie nach Abbau aus natürlichen Lagerstätten durch Klassifizierung nach Teilchengröße mittels Hydrocyclonen und Zentrifugieren und/oder auch durch Delaminiereinrichtungen aufbereitet werden.

Die erfindungsgemäße Pigmentmischung kann durch einfaches Vermischen der einzelnen Komponenten in an sich bekannter Weise hergestellt werden.

Grundsätzlich sind drei Wege für die Herstellung einer Streichmasse für die Papierbeschichtung, also der vorzugsweisen Verwendung der erfindungsgemäßen Pigmentmischung, möglich. Diese Wege führen zunächst zu einem Slurry wie folgt:

1. $CaCO_3$, insbesondere natürliches $CaCO_3$, oder Dolomit als Pulverware wird mit Hydrosilikat, z.B. Talkum, ebenfalls als Pulverware oder Granulat (mit ca. 10 % Wasser) zusammen in einem Mischer dispergiert. Als Dispergiermittel wird Na- oder NH -polyacrylat verwendet. Der Feststoff der Slurry kann auf bis zu 75 Gew.% eingestellt werden. Zur besseren Benetzung des Hydrosilikats im Falle von Talkum wird ein Netzmittel eingesetzt.

2. $CaCO_3$, insbesondere natürliches $CaCO_3$, oder Dolomit liegt als Slurry vor und das Hydrosilikat, z.B. Talkum-Pulver oder -Granulat wird in dieser Slurry unter vorheriger Beimengung von Wasser für das Hydrosilikat, z.B. Talkum, Dispergiermittel und Netzmittel dispergiert bis zu Feststoffen von maximal 75 %.

3. Calciumcarbonat, insbesondere natürliches Calciumcarbonat, bzw. Dolomit liegt als 65 - 75 %ige Siurry vor und das Hydrosilikat, z.B. Talkum, liegt ebenfalls als 65 - 75%ige Slurry vor (dispergiert mit den vorstehend erwähnten, an sich bekannten Polyacrylaten und Netzmitteln) und beide Pigmente werden dann mittels Mischgeräten und Dispergieraggregaten zusammengemischt und auf einen Feststoffgehalt von ca. 75 % gebracht, abhängig von dem Mischverhältnis.

Die unter 2. beschriebene Aufbereitung wird gegenüber 1. deswegen bevorzugt, weil die gesamte Dispergierarbeit erheblich vermindert werden kann und ein höherer Feststoffgehalt erzielt wird. Das Einmischen von Talkum-Pulver oder -Granulat in die $CaCO_3$-Slurry ist bedeutend einfacher und zeitlich kürzer. Agglomerate in der Pulverware des Hydrosilikats, insbesondere des Talkums, können so auch besser zerschlagen werden.

Die unter drei beschriebene Aufbereitung ist die wirtschaftlichste und beste Herstellungsweise, da die gesamte Dispergierarbeit in der Papierfabrik entfällt.

Eine vorzugsweise einzuhaltende Voraussetzung für den Einsatz der erfindungsgemäßen Pigmentmischungen in Streichfarben ist die Herstellung des Streichrohpapiers bei einem $p_H$-Wert von 6,8 bis 7,5 (sogenannte "neutrale Papierherstellung").

Weitere Aufgabenstellungen, Merkmale und Vorteile der Erfindung ergeben sich aus der folgenden Beschreibung anhand von Ausführungsbeispielen (alle Prozentangaben in der gesamten Beschreibung beziehen sich auf Gewichtsprozente, wenn nichts anderes angegeben ist. "atro" bedeutet "absolut trocken".):

Ausführungsbeispiele:

Beispiel I:

50 Gew.% nat. $CaCO_3$ 99 % < 10 $\mu$m
90 % < 2 $\mu$m
60 % < 1 $\mu$m
10 % < 0,2 $\mu$m

EP 0 332 102 B1

spez. Oberfläche BET: 10 m$^2$/g
Weisse Elrepho R457: 86 %
50 Gew.% Talkum (Granulat) 98 % < 20 $\mu$m
50 % < 2 $\mu$m
25 % < 1 $\mu$m
2 % < 0,2 $\mu$m
0,3 % Dispergiermittel - Polyacrylat für Talkum (atro) z.B. Polysalz S
1,2 % Netzmittel (Handelsbasis) für Talkum, z.B. Plastigen T
5 % Kunststoffbinder - Acrylsäureester z.B. Acronal S 548 V oder
Acronal S 538
0,8 % CA - oder Na - Stearat z.B. Nopcote C 104
Feststoffgehalt: 59 %
PH: 9,0

Beispiel II:

80 Gew.% nat. CaCO$_3$ 99 % < 10 $\mu$m
90 % < 2 $\mu$m
60 % < 1 $\mu$m
10 % < 0,2 $\mu$m
Spezifische Oberfläche BET: 10m$^2$/g
Weisse Elrepho R 457: 86 %
20 Gew.% Talkum (Granulat) 98 % < 20 $\mu$m
50 % < 2 $\mu$m
25 % < 1 $\mu$m
2 % < 0,2 $\mu$m
0,3 % Dispergiermittel - Polyacrylat für Talkum (atro) z.B. Polysalz S
1,2 % Netzmittel (Handelsbasis) für Talkum, z.B. Plastigen T
5 % Kunststoffbinder - Acrylsäureester z.B. Acronal S 548 V oder
Acronal S 538
0,8 % Ca - oder Na - Stearat z.B. Nopcote C 104
Feststoffgehalt: 65 %
PH: 9,0

Beispiel III:

50 Gew.% nat CaCO$_3$ 99 % < 10 $\mu$m
60 % < 2 $\mu$m
20 % < 1 $\mu$m
5 % < 0,5 $\mu$m
Spez. Oberfläche BET 4 m$^2$/g
Weisse Elrepho R 457: 86 %
Alle übrigen Verfahrensmaßnahmen wie in Beispiel I.

Beispiel IV:

80 Gew.% nat CaCO$_3$ 99 % < 10 $\mu$m
60 % < 2 $\mu$m
20 % < 1 $\mu$m
5 % < 0,5 $\mu$m
Spezifische Oberfläche BET 4 m$^2$/g
Weisse Elrepho R 457 86 %
Alle übrigen Verfahrensmaßnahmen wie in Beispiel II.

Beispiel V:

50 Gew.% nat. CaCO$_3$ 99 % < 10 $\mu$m
90 % < 2 $\mu$m

9

60 % < 1 $\mu$m

10 % < 0,2 $\mu$m

spez. Oberfläche BET: 10 m$^2$/g

Weisse Elrepho R457: 86 %

25 Gew.% Talkum (Granulat) 98 % < 20 $\mu$m

50 % < 2 $\mu$m

25 % < 1 $\mu$m

2 % < 0,2 $\mu$m

25 Gew.% Kaolin 100 % < 20 $\mu$m

80 % < 2 $\mu$m

51 % < 1 $\mu$m

4 % < 0,2 $\mu$m

0,3 % Dispergiermittel - Polyacrylat für Talkum (atro) z.B. Polysalz S

1,2 % Netzmittel (Handelsbasis) für Talkum, z.B. Plastigen T

5 % Kunststoffbinder - Acrylsäureester z.B. Acronal S 548 V oder

Acronal S 538

0,8 % CA - oder Na - Stearat z.B. Nopcote C 104

Feststoffgehalt: 59 %

PH: 9,0

Anwendungsbeispiele und Vergleichsbeispiele:

Mit der oben beschriebenen Methode wurden viele verschiedene Pigmentmischungen hergestellt, von denen auszugsweise 4 ausgewählte, besonders unterschiedliche Mischverhältnisse nachfolgend beschrieben werden.

Die Prüfung dieser Mischprodukte in Streichfarben erfolgte auf einer Pilotstreichanlage, deren Ergebnisse direkt in die Praxis übertragbar sind.

1. Mischrezeptur:

100 Gew.% Superclay M

(entsprechend dem heutigen Stand der Technik)

2. Mischrezeptur (entsprechend der Erfindung)

50 Gew.% nat. CaCO$_3$ 99 % < 10 $\mu$m

90 % < 2 $\mu$m

60 % < 1 $\mu$m

10 % < 0,2 $\mu$m

50 Gew. % Talkum 98 % < 20 $\mu$m

50 % < 2 $\mu$m

25 % < 1 $\mu$m

2 % < 0,2 $\mu$m

3. Mischrezeptur (entsprechend der Erfindung)

50 Gew.% nat. CaCO$_3$ (wie 2)

25 Gew. % Talkum (wie 2)

25 Gew. % Kaolin 98 % < 20 $\mu$m

75 % < 2 $\mu$m

45 % < 1 $\mu$m

12 % < 0,2 $\mu$m

4. Mischrezeptur (entsprechend der Erfindung)

60 Gew.% nat CaCO$_3$ (wie 2)

20 Gew.% Talkum (wie 2)

20 Gew.% Kaolin (wie 3)

Für die 1. Mischrezeptur wurden, basierend auf 100 Gew.% Gesamtpigment (Superclay M) folgende Produkte zur Streichfarbenherstellung verwendet:

| | |
|---|---|
| Bindemittel (acrylsäureesterhaltiges, Mischpolymerisat), selbstverdickend | 5,0 GT atro |
| Dispergiermittel (Na-Polyacrylat) | 0,3 GT atro |
| Calciumstearat | 0,8 GT atro |

10

Der Feststoff der Streichfarbe wurde auf 52 % eingestellt.

- Für die Mischrezeptur 2 wurden, ebenfalls basierend auf 100 Gew.% Gesamtpigment folgende Produkte zur Streichfarbenherstellung verwendet:

| Bindemittel (acrylsäureesterhaltiges Mischpolymerisat), selbstverdickend | 5,0 GT atro |
| Dispergiermittel für Talkum (Na-Polyacrylat) | 0,3 GT atro |
| Netzmittel für Talkum (Polyethylenglykol) | 1,2 GT lutro |
| Na-Stearat | 0,4 GT atro |

Der Feststoffgehalt der Streichfarbe wurde auf 59 % eingestellt.

- Für die Mischrezepturen 3 und 4, wurden ebenfalls basierend auf je 100 Gew.% Gesamtpigment) folgende Produkte zur Streichfarbenherstellung verwendet:

```
Bindemittel (wie 1 - 3)          5,0 GT atro
Dispergiermittel
für Talkum (wie 2)               0,3 GT atro
Netzmittel für Talkum (wie 2)    1,2 GT lutro
Dispergiermittel für Kaolin      0,3 GT atro
Natriumstearat                   0,4 GT atro
```

Der Feststoffgehalt der Streichfarben wurde auf 59 % eingestellt.

Für alle genannten Mischrezepturen wurde eine $CaCO_3$-Slurry, bereits dispergiert mit Na-Polyacrylat bei einem Feststoffgehalt von 72,5 % eingesetzt.

Streichbedingungen (für alle genannten Streichfarben)

Streichrohpapier: 35 - 37 g/m², holzhaltig

Strichauftrag: O.S. 7 g/m², S.S. 8 g/m²

Streichaggregat: Combi Blade Coater- bzw. Inverted Bladecoater

Geschwindigkeit: 1300 - 1500 m/min.

Strich-Trocknung: Gas Infrarot Strahler 1200°C. + Airfoils 300°C

Satinage: Superkalander-Pilotanlage 400 m/min, 80°C Stahlwalzentemperatur.

O.S. = Oberseite, S.S. = Siebseite.

Prüfbedingungen

Glanz: nach Tappi im 75° Einstrahlund Abstrahlwinkel

Opazität: nach DIN 53 146

Laborandruck:

Druckgerät Prüfbau Tiefdruck-Probedruckgerät

Druckzylinder graviert

Druckgeschwindigkeit 5 m/s

Farbe Rotationstiefdruckfarbe (schwarz)

Die Beurteilung der Druckqualität erfolgte visuell. Es wurde eine Rangfolge erstellt.

Druckglanz:

Die Glanzmessung erfolgt nach Tappi im 75° Einstrahl- und Abstrahlwinkel auf der Vollfläche des Laborandrucks-Tiefdruck.

Durchschlagen und Durchscheinen:

Es werden die Laborandrucke-Tiefdrucke verwendet.

Man mißt den Remissionsgrad des gestrichenen unbedruckten Papieres (=R) und den Remissionsgrad der Rückseite der bedruckten Vollflächen (=Rfr).

Die Berechnung erfolgt nach der Formel

$$\frac{R - Rfr}{R} \cdot 100$$

Praxisdruckversuche:

| | |
|---|---|
| Druckmaschine | Wifang Rotomaster |
| Druckzylinder | graviert |
| Zylinderumdrehungen / h | 15000 |
| Farbreihenfolge | Gelb, Magenta, Cyan, Schwarz |

Alle Papiere wurden ohne statische Druckhilfe verdruckt.

Die Auswertung der Praxisdruckversuche erfolgte visuell. Es wurde folgende Rangfolge erstellt:

| Prüfresultate | | | | |
|---|---|---|---|---|
| | Streichrezeptur Nr | | | |
| | 1 | 2 | 3 | 4 |
| Papierglanz (Kalander, Labor) % | 36/35 | 40/40 | 39/41 | 42/41 |
| Druckglanz (Praxis): % | 70 | 74 | 74 | 76 |
| Opazität: % | 89,3 | 90,5 | 90,0 | 90,5 |
| Praxisdruckversuche Tiefdruck Rangfolge | 4 | 1 | 2 | 3 |

Zusammenfassung:

Es werden Pigmentmischungen aus $CaCO_3$ oder calciumcarbonathaltigem Pigment und Hydrosilikaten offenbart, die es erlauben, Streichfarben besonders für LWC-Tiefdruckpapiere herzustellen, die entgegen der Meinung der Fachwelt überraschende Vorteile wie folgt zeigen:

1. Bei deutlich höherem Feststoffgehalt (Stand der Technik: 52 - 54 %; Erfindung: 59 - 61 %) wird selbst bei höchsten Geschwindigkeiten der Streichmaschine bis 1500 m/min durch bessere rheologische Eigenschaften ein günstigeres, problemloseres Laufverhalten am Streichaggregat erreicht (keine Rakelstreifen, keine Bartbildung am Streichmesser).

2. Die Prüfungsresultate zeigen für die gesamten erfindungsgemäßen Mischungen bessere Eigenschaften bezüglich Glanz, Druckglanz, Opazität und Bedruckbarkeit im Tiefdruck als der heutige Stand der Technik es zuläßt.

3. Die erfindungsgemäßen Pigmentmischungen ergeben aufgrund des höheren Feststoffgehaltes in Streichfarben (=weniger Energieaufwand beim Trocknen und damit höhere Maschinengeschwindigkeiten) sowie niedrige Pigmentkosten insgesamt eine höhere Wirtschaftlichkeit für die Papierindustrie.

Die Erfindung weist insbesondere folgende Vorteile auf:

1. Durch die erfindungsgemäße Abmischung, insbesondere von natürlichem $CaCO_3$ und Hydrosilikat, z.B. Talkum wie oben beschrieben, werden die Laufeigenschaften an schnellaufenden Streichmaschinen gegenüber herkömmlichen Kaolin-Rezepturen dermaßen verbessert, daß der Feststoffgehalt

a) bei LWC Tiefdruckstrichen von 50 - 55 % auf 58 - 65 % (Strichauftrag 7 - 12 g/m$^2$/Seite) und

b) bei LWC Rollenoffsetstrichen von 54 - 58 % auf 58 - 65 % (Strichauftrag 7 - 12 g/m$^2$/Seite) abhängig vom jeweils geforderten Auftragsgewicht erhöht werden kann.

2. Der durch die verbesserten Laufeigenschaften der erfindungsgemäßen Mischung, insbesondere von $CaCO_3$ und Hydrosilikat, z.B. Talkum, erhöhte Trockengehalt führt aufgrund niedrigerer Trocknungsarbeit in einer Streichmaschine zur Energieeinsparung von 10 - 30 %. Anstelle oder zusammen mit der Energieeinsparung wird die Erhöhung der Streichmaschinengeschwindigkeit möglich, die wiederum Produktionssteigerungen bewirkt.

**Patentansprüche**
**Patentansprüche für folgende Vertragsstaaten : AT, BE, CH, DE, FR, GB, GR, IT, LI, LU, NL, SE**

1. Pigmentmischung, enthaltend Calciumcarbonat und Talkum,
   dadurch gekennzeichnet,
   daß sie besteht aus
   40 - 80 Gew.% Calciumcarbonat und/oder Dolomit und
   20 - 60 Gew.% Talkum oder 20 - 60 Gew.% eines Talkum-Kaolin-Gemischs mit einem Anteil von 50 - 80 Gew.% Talkum in diesem Talkum-Kaolin-Gemisch oder 20 - 60 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:
   a) 98 - 100 % an Teilchen < 20 $\mu$m
   b) 25 - 70 % an Teilchen < 2 $\mu$m
   c) 12 - 40 % an Teilchen < 1 $\mu$m
   d) 0,1- 12 % an Teilchen < 0,2 $\mu$m
   jeweils eines entsprechenden sphärischen Durchmessers.

2. Pigmentmischung nach Anspruch 1,
   dadurch gekennzeichnet,
   daß das Calciumcarbonat oder der Dolomit folgende Kornverteilung aufweist
   a) 95 - 100 % an Teilchen < 10 $\mu$m
   b) 60 - 98 % an Teilchen < 2 $\mu$m
   c) 15 - 80 % an Teilchen < 1 $\mu$m
   d) 0,1- 20 % an Teilchen < 0,2 $\mu$m,
   jeweils eines entsprechenden sphärischen Durchmessers.

3. Pigmentmischung nach Anspruch 1 oder 2,
   dadurch gekennzeichnet,
   daß die spezifische Oberfläche nach BET des Calciumcarbonats oder des Dolomits im Bereich von 3 - 18 m$^2$/g liegt.

4. Pigmentmischung nach einem oder mehreren der vorhergehenden Ansprüche,
   dadurch gekennzeichnet,
   daß die spezifische Oberfläche nach BET des Talkums oder Kaolins oder Glimmers im Bereich von 5 - 16 m$^2$/g liegt.

5. Pigmentmischung nach einem oder mehreren der vorhergehenden Ansprüche,
   dadurch gekennzeichnet,
   daß sie besteht aus 80 Gew.% Calciumcarbonat und/oder Dolomit und 20 Gew.% Talkum.

6. Pigmentmischung nach einem oder mehreren der vorhergehenden Ansprüche,
   dadurch gekennzeichnet,
   daß sie besteht aus 50 - 60 Gew.% Calciumcarbonat und/oder Dolomit und
   40 - 50 Gew.% Talkum oder 40 - 50 Gew.% eines Talkum-Kaolin-Gemischs mit einem Anteil von 50 - 80 Gew.% Talkum in diesem Talkum-Kaolin-Gemisch oder 40 - 50 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:
   a) 98 - 100 % an Teilchen < 20 $\mu$m
   b) 25 - 70 % an Teilchen < 2 $\mu$m
   c) 12 - 40 % an Teilchen < 1 $\mu$m
   d) 0,1- 12 % an Teilchen <0,2 $\mu$m
   jeweils eines entsprechenden sphärischen Durchmessers.

7. Pigmentmischung nach einem oder mehreren der vorhergehenden Ansprüche,
   dadurch gekennzeichnet,
   daß sie besteht aus 53 Gew.% Caiciumcarbonat und/oder Dolomit und
   47 Gew.% Talkum oder 47 Gew.% eines Talkum-Kaolin-Gemischs mit einem Anteil von 50 - 80 Gew.% Talkum in diesem Talkum-Kaolin-Gemisch oder 47 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist;

    a) 98 - 100 % an Teilchen < 20 $\mu$m

    b) 25 - 70 % an Teilchen < 2 $\mu$m

    c) 12 - 40 % an Teilchen < 1 $\mu$m

    d) 0,1- 12 % an Teiichen <0,2 $\mu$m

jeweils eines entsprechenden sphärischen Durchmessers.

8. Pigmentmischung nach einem oder mehreren der vorhergehenden Ansprüche,
dadurch gekennzeichnet,
daß sie besteht aus 45 Gew.% Calciumcarbonat und/oder Dolomit und
55 Gew.% Talkum oder 55 Gew.% eines Talkum-Kaolin-Gemischs mit einem Anteil von 50 - 80 Gew.% Talkum in diesem Talkum-Kaolin-Gemisch oder 55 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

    a) 98 - 100 % an Teilchen < 20 $\mu$m

    b) 25 - 70 % an Teilchen < 2 $\mu$m

    c) 12 - 40 % an Teilchen < 1 $\mu$m

    d) 0,1- 12 % an Teilchen <0,2 $\mu$m

jeweils eines entsprechenden sphärischen Durchmessers.

9. Pigmentmischung nach einem oder mehreren der vorhergehenden Ansprüche,
dadurch gekennzeichnet,
daß sie besteht aus 50 Gew.% Calciumcarbonat und/oder Dolomit und
50 Gew.% Talkum oder 50 Gew.% eines Talkum-Kaolin-Gemischs mit einem Anteil von 50 - 80 Gew.% Talkum in diesem Talkum-Kaolin-Gemisch oder 50 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

    a) 98 - 100 % an Teilchen < 20 $\mu$m

    b) 25 - 70 % an Teilchen < 2 $\mu$m

    c) 12 - 40 % an Teilchen < 1 $\mu$m

    d) 0,1- 12 % an Teilchen <0,2 $\mu$m

jeweils eines entsprechenden sphärischen Durchmessers.

10. Pigmentmischung nach einem oder mehreren der vorhergehenden Ansprüche,
dadurch gekennzeichnet,
daß das Calciumcarbonat oder der Dolomit folgende Kornverteilung aufweist

    a) 97 - 100 % an Teilchen < 10 $\mu$m

    b) 85 - 92 % an Teiichen < 2 $\mu$m

    c) 45 - 65 % an Teilchen < 1 $\mu$m

    d) 7 - 12 % an Teilchen < 0,2 $\mu$m,

jeweils eines entsprechenden sphärischen Durchmessers.

11. Pigmentmischung nach einem oder mehreren der vorhergehenden Ansprüche,
dadurch gekennzeichnet,
daß sie besteht aus
50 - 60 Gew.% Calciumcarbonat oder Dolomit
20 - 30 Gew.% Talkum und
20 - 30 Gew.% Kaolin.

12. Pigmentmischung nach einem oder mehreren der vorhergehenden Ansprüche,
dadurch gekennzeichnet,
daß sie besteht aus
50 Gew.% Calciumcarbonat oder Dolomit
25 Gew.% Talkum und
25 Gew.% Kaolin.

13. Pigmentmischung nach einem oder mehreren der vorhergehenden Ansprüche,
dadurch gekennzeichnet,
daß der Glimmer folgende Kornverteilung aufweist
    a) 98 - 100 % an Teilchen < 20 $\mu$m
    b) 25 - 70 % an Teilchen < 2 $\mu$m
    c) 12 - 40 % an Teilchen < 1 $\mu$m
    d) 0,1- 12 % an Teilchen < 0,2 $\mu$m,
jeweils eines entsprechenden sphärischen Durchmessers.

14. Pigmentmischung nach einem oder mehreren der vorhergehenden Ansprüche,
dadurch gekennzeichnet,
daß das Talkum folgende Kornverteilung aufweist
    a) 98 - 100 % an Teilchen < 20 $\mu$m
    b) 40 - 58 % an Teilchen < 2 $\mu$m
    c) 20 - 34 % an Teilchen < 1 $\mu$m
    d) 0,1- 5 % an Teilchen < 0,2 $\mu$m,
jeweils eines entsprechenden sphärischen Durchmessers.

15. Pigmentmischung nach einem oder mehreren der vorhergehenden Ansprüche,
dadurch gekennzeichnet,
daß das Talkum folgende Kornverteilung aufweist
    a) 98 % an Teilchen < 20 $\mu$m
    b) 50 % an Teilchen < 2 $\mu$m
    c) 25 % an Teilchen < 1 $\mu$m
    d) 2 % an Teilchen < 0,2 $\mu$m,
jeweils eines entsprechenden sphärischen Durchmessers.

16. Pigmentmischung nach einem oder mehreren der vorhergehenden Ansprüche,
dadurch gekennzeichnet,
daß das Kaolin folgende Kornverteilung aufweist
    a) 90 - 100 % an Teilchen < 20 $\mu$m
    b) 20 - 93 % an Teilchen < 2 $\mu$m
    c) 10 - 60 % an Teilchen < 1 $\mu$m
    d) 0,1- 10 % an Teilchen < 0,2 $\mu$m,
jeweils eines entsprechenden sphärischen Durchmessers.

17. Pigmentmischung nach einem oder mehreren der vorhergehenden Ansprüche,
dadurch gekennzeichnet,
daß das Kaolin folgende Kornverteilung aufweist
    a) 95 - 100 % an Teilchen < 20 $\mu$m
    b) 55 - 85 % an Teilchen < 2 $\mu$m
    c) 30 - 54 % an Teilchen < 1 $\mu$m
    d) 2 - 7 % an Teilchen < 0,2 $\mu$m,
jeweils eines entsprechenden sphärischen Durchmessers.

18. Pigmentmischung nach einem oder mehreren der vorhergehenden Ansprüche,
dadurch gekennzeichnet,
daß die spezifische Oberfläche nach BET des Calciumcarbonats oder des Dolomits 10 m$^2$/g beträgt.

19. Pigmentmischung nach einem oder mehreren der vorhergehenden Ansprüche,
dadurch gekennzeichnet,
daß die spezifische Oberfläche nach BET des Talkums oder Kaolins oder Glimmers 12 m$^2$/g beträgt.

20. Pigmentmischung nach einem oder mehreren der vorhergehenden Ansprüche,
dadurch gekennzeichnet,
daß sie zusätzlich 0,5 - 1,5 Gew.% Netzmittel, bezogen auf den Gehalt an Talkum bzw. Talkum-Kaolin-Gemisch bzw. Talkum-Glimmer-Gemisch enthält.

**21.** Pigmentmischung nach einem oder mehreren der vorhergehenden Ansprüche,
dadurch gekennzeichnet,
daß sie zusätzlich 0,1 - 0,3 Gew.% Dispergiermittel, bezogen auf den Gehalt an Talkum bzw. Talkum-Kaolin-Gemisch bzw. Talkum-Glimmer-Gemisch enthält.

**22.** Pigmentmischung nach einem oder mehreren der vorhergehenden Ansprüche,
dadurch gekennzeichnet,
daß das Calciumcarbonat ein natürliches Calciumcarbonat ist.

**23.** Verfahren zur Herstellung eines die Pigmentmischung der Ansprüche 1 - 22 enthaltenden Slurrys,
dadurch gekennzeichnet,
daß die Pigmente zunächst getrennt im trockenen Zustand vorliegen, im trockenen Zustand vermischt und anschließend zusammen dispergiert werden
oder
daß das Calciumcarbonat und/oder der Dolomit als Slurry vorliegen und das Talkum, Talkum-Glimmer-Gemisch oder Talkum-Kaolin-Gemisch im trockenen Zustand vorliegen und anschließend das letztere in den Slurry eingemischt wird und die Pigmente anschließend zusammen dispergiert werden
oder
daß alle Pigmente zunächst getrennt als Slurry vorliegen und anschließend vermischt und dispergiert werden.

**24.** Verfahren zur Herstellung eines Slurrys nach Anspruch 23, dadurch gekennzeichnet,
daß zunächst Calciumcarbonat oder der Dolomit als 65 - 75 Gew.%ige Slurry vorbereitet wird, dann das Talkum bzw. Talkum enthaltende Gemisch als 65 - 75 Gew.%ige Slurry ebenfalls vorbereitet wird, wobei letzteres mit Natrium- oder Ammonium-polyacrylat und Netzmitteln dispergiert wird, und dann beide Pigmente mittels Mischgeräten und Dispergieraggregaten zusammengemischt werden, bis ein Feststoffgehalt von ca. 75 Gew.% erreicht ist, abhängig von den Mischverhältnissen.

**25.** Verwendung der Pigmentmischung nach einem oder mehreren der Ansprüche 1 - 22 zur Herstellung einer Streichmasse für die Papierindustrie.

**26.** Verwendung der Pigmentmischung nach Anspruch 25 zur Herstellung einer Streichmasse für Tiefdruckpapiere, bestehend aus 40 - 80 Gew.% Calciumcarbonat oder Dolomit, 20 - 60 Gew.% Talkum bzw. Talkum enthaltendes Gemisch und zusätzlich 4 - 6 Gew.% Bindemittel, bezogen auf den Gehalt der gesamten Pigmentmischung, 0,1 - 0,3 Gew.% Dispergiermittel, bezogen auf den Gehalt an Talkum bzw. Talkum enthaltendes Gemisch, 0,5 - 1,5 Gew.% Netzmittel, bezogen auf den Gehalt an Talkum bzw. Talkum enthaltendes Gemisch, 0,1 - 1,2 Gew.% Na- oder Ca-stearat, bezogen auf den Gehalt der gesamten Pigmentmischung und soviel Wasser, daß ein Feststoffgehalt von 50 bis 65 Gew.% vorliegt.

**27.** Verwendung der Pigmentmischung nach Anspruch 25 oder 26 zur Herstellung einer Streichmasse für leichtgewichtige gestrichene Tiefdruckpapiere (LWC).

**28.** Verwendung der Pigmentmischung nach einem oder mehreren der Ansprüche 25 - 27 zur Herstellung von leichtgewichtigen gestrichenen Tiefdruckpapieren (LWC) bei hoher Auftragsgeschwindigkeit (bis 1500 m/Minute).

**29.** Verwendung der Pigmentmischung nach Anspruch 25 zur Herstellung von Rollen-Offsetpapieren.

**30.** Verwendung der Pigmentmischung nach Anspruch 29 zur Herstellung von leichtgewichtigen gestrichenen Rollen-Offsetpapieren (LWC-Rollen-Offsetpapieren).

**31.** Verwendung der Pigmentmischung nach einem oder mehreren der Ansprüche 1 - 22 in Farben, Lacken und in Kunststoffen.

**32.** Streichmasse für Tiefdruckpapiere, enthaltend eine Pigmentmischung nach einem oder mehreren der Ansprüche 1 - 22, bestehend aus 40 - 80 Gew.% Calciumcarbonat oder Dolomit, 20 - 60 Gew.% Talkum bzw. Talkum enthaltendes Gemisch und zusätzlich 4 - 6 Gew.% Bindemittel, bezogen auf den Gehalt der gesamten Pigmentmischung, 0,1 - 0,3 Gew.% Dispergiermittel, bezogen auf den Gehalt an Talkum bzw. Talkum enthaltendes Gemisch, 0,5 - 1,5 Gew.% Netzmittel, bezogen auf den Gehalt an Talkum bzw. Talkum enthaltendes Gemisch, 0,1 - 1,2 Gew.% Na- oder Ca-stearat, bezogen auf den Gehalt der gesamten Pigmentmischung und soviel Wasser, daß ein Feststoffgehalt von 50 bis 65 Gew.% vorliegt.

**Patentansprüche für folgenden Vertagsstaat : ES**

1. Verfahren zur Herstellung einer Calciumcarbonat und Talkum enthaltenden Pigmentmischung, hergestellt durch Vermischen von

   40 - 80 Gew.% Calciumcarbonat und/oder Dolomit und

   20 - 60 Gew.% Talkum oder 20 - 60 Gew.% eines Talkum-Kaolin-Gemischs mit einem Anteil von 50 - 80 Gew.% Talkum in diesem Talkum-Kaolin-Gemisch oder

   20 - 60 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

   a) 98 - 100 % an Teilchen < 20 $\mu$m

   b) 25 - 70 % an Teilchen < 2 $\mu$m

   c) 12 - 40 % an Teilchen < 1 $\mu$m

   d) 0,1- 12 % an Teilchen < 0,2 $\mu$m

   jeweils eines entsprechenden sphärischen Durchmessers.

2. Verfahren nach Anspruch 1,
   dadurch gekennzeichnet,
   daß das Calciumcarbonat oder der Dolomit folgende Kornverteilung aufweist

   a) 95 - 100 % an Teilchen < 10 $\mu$m

   b) 60 - 98 % an Teilchen < 2 $\mu$m

   c) 15 - 80 % an Teilchen < 1 $\mu$m

   d) 0,1- 20 % an Teilchen < 0,2 $\mu$m,

   jeweils eines entsprechenden sphärischen Durchmessers.

3. Verfahren nach Anspruch 1 oder 2,
   dadurch gekennzeichnet,
   daß die spezifische Oberfläche nach BET des Calciumcarbonats oder des Dolomits im Bereich von 3 - 18 m$^2$/g liegt.

4. Verfahren nach einem oder mehreren der vorhergehenden Ansprüche,
   dadurch gekennzeichnet,
   daß die spezifische Oberfläche nach BET des Talkums oder Kaolins oder Glimmers im Bereich von 5 - 16 m$^2$/g liegt.

5. Verfahren nach einem oder mehreren der vorhergehenden Ansprüche,
   dadurch gekennzeichnet,
   daß sie hergestellt wird aus 80 Gew.% Calciumcarbonat und/oder Dolomit und 20 Gew.% Talkum.

6. Verfahren nach einem oder mehreren der vorhergehenden Ansprüche,
   dadurch gekennzeichnet,
   daß sie hergestellt wird aus 50 - 60 Gew.% Calciumcarbonat und/oder Dolomit und

   40 - 50 Gew.% Talkum oder 40 - 50 Gew.% eines Talkum-Kaolin-Gemischs mit einem Anteil von 50 - 80 Gew.% Talkum in diesem Talkum-Kaolin-Gemisch oder 40 - 50 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

   a) 98 - 100 % an Teilchen < 20 $\mu$m

   b) 25 - 70 % an Teilchen < 2 $\mu$m

   c) 12 - 40 % an Teilchen < 1 $\mu$m

   d) 0,1- 12 % an Teilchen < 0,2 $\mu$m

   jeweils eines entsprechenden sphärischen Durchmessers.

7. Verfahren nach einem oder mehreren der vorhergehenden Ansprüche,
   dadurch gekennzeichnet,

daß sie hergestellt wird aus 53 Gew.% Calciumcarbonat und/oder Dolomit und 47 Gew.% Talkum oder 47 Gew.% eines Talkum-Kaolin-Gemischs mit einem Anteil von 50 - 80 Gew.% Talkum in diesem Talkum-Kaolin-Gemisch oder 47 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

a) 98 - 100 % an Teilchen < 20 $\mu$m

b) 25 - 70 % an Teilchen < 2 $\mu$m

c) 12 - 40 % an Teilchen < 1 $\mu$m

d) 0,1- 12 % an Teilchen < 0,2 $\mu$m

jeweils eines entsprechenden sphärischen Durchmessers.

8. Verfahren nach einem oder mehreren der vorhergehenden Ansprüche,
dadurch gekennzeichnet,
daß sie hergestellt wird aus 45 Gew.% Calciumcarbonat und/oder Dolomit und 55 Gew.% Talkum oder 55 Gew.% eines Talkum-Kaolin-Gemischs mit einem Anteil von 50 - 80 Gew.% Talkum in diesem Talkum-Kaolin-Gemisch oder 55 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

a) 98 - 100 % an Teilchen < 20 $\mu$m

b) 25 - 70 % an Teilchen < 2 $\mu$m

c) 12 - 40 % an Teilchen < 1 $\mu$m

d) 0,1- 12 % an Teilchen < 0,2 $\mu$m

jeweils eines entsprechenden sphärischen Durchmessers.

9. Verfahren nach einem oder mehreren der vorhergehenden Ansprüche,
dadurch gekennzeichnet,
daß sie hergestellt wird aus 50 Gew.% Calciumcarbonat und/oder Dolomit und 50 Gew.% Talkum oder 50 Gew.% eines Talkum-Kaolin-Gemischs mit einem Anteil von 50 - 80 Gew.% Talkum in diesem Talkum-Kaolin-Gemisch oder 50 Gew.% eines Talkum-Glimmer-Gemischs mit einem Anteil von 50 - 80 Gew.% Talkum in diesem Talkum-Glimmer-Gemisch, wobei das Talkum jeweils folgende Kornverteilung aufweist:

a) 98 - 100 % an Teilchen < 20 $\mu$m

b) 25 - 70 % an Teilchen < 2 $\mu$m

c) 12 - 40 % an Teilchen < 1 $\mu$m

d) 0,1- 12 % an Teilchen < 0,2 $\mu$m

jeweils eines entsprechenden sphärischen Durchmessers.

10. Verfahren nach einem oder mehreren der vorhergehenden Ansprüche,
dadurch gekennzeichnet,
daß das Calciumcarbonat oder der Dolomit folgende Kornverteilung aufweist

a) 97 - 100 % an Teilchen < 10 $\mu$m

b) 85 - 92 % an Teilchen < 2 $\mu$m

c) 45 - 65 % an Teilchen < 1 $\mu$m

d) 7 - 12 % an Teilchen < 0,2 $\mu$m,

jeweils eines entsprechenden sphärischen Durchmessers.

11. Verfahren nach einem oder mehreren der vorhergehenden Ansprüche,
dadurch gekennzeichnet,
daß sie hergestellt wird aus

50 - 60 Gew.% Calciumcarbonat oder Dolomit

20 - 30 Gew.% Talkum und

20 - 30 Gew.% Kaolin.

12. Verfahren nach einem oder mehreren der vorhergehenden Ansprüche,
dadurch gekennzeichnet,
daß sie hergestellt wird aus

50 Gew.% Calciumcarbonat oder Dolomit

25 Gew.% Talkum und

25 Gew.% Kaolin.

**13.** Verfahren nach einem oder mehreren der vorhergehenden Ansprüche,
dadurch gekennzeichnet,
daß der Glimmer folgende Kornverteilung aufweist
   a) 98 - 100 % an Teilchen < 20 $\mu$m
   b) 25 - 70 % an Teilchen < 2 $\mu$m
   c) 12 - 40 % an Teilchen < 1 $\mu$m
   d) 0,1- 12 % an Teilchen < 0,2 $\mu$m,
jeweils eines entsprechenden sphärischen Durchmessers.

**14.** Verfahren nach einem oder mehreren der vorhergehenden Ansprüche,
dadurch gekennzeichnet,
daß das Talkum folgende Kornverteilung aufweist
   a) 98 - 100 % an Teilchen < 20 $\mu$m
   b) 40 - 58 % an Teilchen < 2 $\mu$m
   c) 20 - 34 % an Teilchen < 1 $\mu$m
   d) 0,1- 5 % an Teilchen < 0,2 $\mu$m,
jeweils eines entsprechenden sphärischen Durchmessers.

**15.** Verfahren nach einem oder mehreren der vorhergehenden Ansprüche,
dadurch gekennzeichnet,
daß das Talkum folgende Kornverteilung aufweist
   a) 98 % an Teilchen < 20 $\mu$m
   b) 50 % an Teilchen < 2 $\mu$m
   c) 25 % an Teilchen < 1 $\mu$m
   d) 2 % an Teilchen < 0,2 $\mu$m,
jeweils eines entsprechenden sphärischen Durchmessers.

**16.** Verfahren nach einem oder mehreren der vorhergehenden Ansprüche,
dadurch gekennzeichnet,
daß das Kaolin folgende Kornverteilung aufweist
   a) 90 - 100 % an Teilchen < 20 $\mu$m
   b) 20 - 93 % an Teilchen < 2 $\mu$m
   c) 10 - 60 % an Teilchen < 1 $\mu$m
   d) 0,1- 10 % an Teilchen < 0,2 $\mu$m,
jeweils eines entsprechenden sphärischen Durchmessers.

**17.** Verfahren nach einem oder mehreren der vorhergehenden Ansprüche,
dadurch gekennzeichnet,
daß das Kaolin folgende Kornverteilung aufweist
   a) 95 - 100 % an Teilchen < 20 $\mu$m
   b) 55 - 85 % an Teilchen < 2 $\mu$m
   c) 30 - 54 % an Teilchen < 1 $\mu$m
   d) 2 - 7 % an Teilchen < 0,2 $\mu$m,
jeweils eines entsprechenden sphärischen Durchmessers.

**18.** Verfahren nach einem oder mehreren der vorhergehenden Ansprüche,
dadurch gekennzeichnet,
daß die spezifische Oberfläche nach BET des Calciumcarbonats oder des Dolomits 10 m$^2$/g beträgt.

**19.** Verfahren nach einem oder mehreren der vorhergehenden Ansprüche,
dadurch gekennzeichnet,
daß die spezifische Oberfläche nach BET des Talkums oder Kaolins oder Glimmers 12 m$^2$/g beträgt.

**20.** Verfahren nach einem oder mehreren der vorhergehenden Ansprüche,
dadurch gekennzeichnet,
daß zusätzlich 0,5 - 1,5 Gew.% Netzmittel, bezogen auf den Gehalt an Talkum bzw. Talkum-Kaolin-Gemisch bzw. Talkum-Glimmer-Gemisch, eingearbeitet werden.

21. Verfahren nach einem oder mehreren der vorhergehenden Ansprüche,
    dadurch gekennzeichnet,
    daß zusätzlich 0,1 - 0,3 Gew.% Dispergiermittel, bezogen auf den Gehalt an Talkum bzw. Talkum-Kaolin-Gemisch bzw. Talkum-Glimmer-Gemisch, eingearbeitet werden.

22. Verfahren nach einem oder mehreren der vorhergehenden Ansprüche,
    dadurch gekennzeichnet,
    daß das Calciumcarbonat ein natürliches Calciumcarbonat ist.

23. Verfahren zur Herstellung eines die Pigmentmischung der Ansprüche 1 - 22 enthaltenden Slurrys,
    dadurch gekennzeichnet,
    daß die Pigmente zunächst getrennt im trockenen Zustand vorliegen, im trockenen Zustand vermischt und anschließend zusammen dispergiert werden
    oder
    daß das Calciumcarbonat und/oder der Dolomit als Slurry vorliegen und das Talkum, Talkum-Glimmer-Gemisch oder Talkum-Kaolin-Gemisch im trockenen Zustand vorliegen und anschließend das letztere in den Slurry eingemischt wird und die Pigmente anschließend zusammen dispergiert werden
    oder
    daß alle Pigmente zunächst getrennt als Slurry vorliegen und anschließend vermischt und dispergiert werden.

24. Verfahren zur Herstellung eines Slurrys nach Anspruch 23, dadurch gekennzeichnet,
    daß zunächst Calciumcarbonat oder der Dolomit als 65 - 75 Gew.%ige Slurry vorbereitet wird, dann das Talkum bzw. Talkum enthaltende Gemisch als 65 - 75 Gew.%ige Slurry ebenfalls vorbereitet wird, wobei letzteres mit Natrium- oder Ammonium-polyacrylat und Netzmitteln dispergiert wird, und dann beide Pigmente mittels Mischgeräten und Dispergieraggregaten zusammengemischt werden, bis ein Feststoffgehalt von ca. 75 Gew.% erreicht ist, abhängig von den Mischverhältnissen.

25. Verwendung der Pigmentmischung nach einem oder mehreren der Ansprüche 1 - 22 zur Herstellung einer Streichmasse für die Papierindustrie.

26. Verwendung der Pigmentmischung nach Anspruch 25 zur Herstellung einer Streichmasse für Tiefdruckpapiere, bestehend aus 40 - 80 Gew.% Calciumcarbonat oder Dolomit, 20 - 60 Gew.% Talkum bzw. Talkum enthaltendes Gemisch und zusätzlich 4 - 6 Gew.% Bindemittel, bezogen auf den Gehalt der gesamten Pigmentmischung, 0,1 - 0,3 Gew.% Dispergiermittel, bezogen auf den Gehalt an Talkum bzw. Talkum enthaltendes Gemisch, 0,5 - 1,5 Gew.% Netzmittel, bezogen auf den Gehalt an Talkum bzw. Talkum enthaltendes Gemisch, 0,1 - 1,2 Gew.% Na- oder Ca-stearat, bezogen auf den Gehalt der gesamten Pigmentmischung und soviel Wasser, daß ein Feststoffgehalt von 50 bis 65 Gew.% vorliegt.

27. Verwendung der Pigmentmischung nach Anspruch 25 oder 26 zur Herstellung einer Streichmasse für leichtgewichtige gestrichene Tiefdruckpapiere (LWC).

28. Verwendung der Pigmentmischung nach einem oder mehreren der Ansprüche 25 - 27 zur Herstellung von leichtgewichtigen gestrichenen Tiefdruckpapieren (LWC) bei hoher Auftragsgeschwindigkeit (bis 1500 m/Minute).

29. Verwendung der Pigmentmischung nach Anspruch 25 zur Herstellung von Rollen-Offsetpapieren.

30. Verwendung der Pigmentmischung nach Anspruch 29 zur Herstellung von leichtgewichtigen gestrichenen Rollen-Offsetpapieren (LWC-Rollen-Offsetpapieren).

31. Verwendung der Pigmentmischung nach einem oder mehreren der Ansprüche 1 - 22 in Farben, Lacken und in Kunststoffen.

**Claims**
**Claims for the following Contracting States : AT, BE, CH, DE, FR, GB, GR, IT, LI, LU, NL, SE**

1. Pigment mixture containing calcium carbonate and talc, characterized in that it consists of 40-80 % by weight calcium carbonate and/or dolomite and 20-60% by weight talc or 20-60% by weight of talc-kaolin mixture with a proportion of 50-80% by weight talc in said talc-kaolin mixture or 20-60% by weight of a talc-mica mixture with a proportion of 50-80% by weight talc in said talc-mica mixture, the talc having respectively the following grain distribution:
    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
    in each case of a corresponding spherical diameter.

2. Pigment mixture according to claim 1, characterized in that the calcium carbonate or the dolomite has the following grain distribution:
    a) 95-100% of particles < 10 $\mu$m
    b) 60-98% of particles < 2 $\mu$m
    c) 15-80% of particles < 1 $\mu$m
    d) 0.1-20% of particles < 0.2 $\mu$m
    in each case of a corresponding spherical diameter.

3. Pigment mixture according to claim 1 or 2,
    characterized in that the specific surface area according to BET of the calcium carbonate or the dolomite lies in the range from 3-18 m$^2$/g.

4. Pigment mixture according to one or more of the preceding claims,
    characterized in that the specific surface area according to BET of the talc or kaolin or mica lies in the range from 5-16 m$^2$/g.

5. Pigment mixture according to one or more of the preceding claims,
    characterized in that it consists of 80% by weight calcium carbonate and/or dolomite and 20% by weight talc.

6. Pigment mixture according to one or more of the preceding claims,
    characterized in that it consists of 50-60% by weight calcium carbonate and/or dolomite and 40-50% by weight talc or 40-50% by weight of a talc-kaolin mixture with a proportion of 50-80% by weight talc in said talc-kaolin mixture or 40-50% by weight of a talc-mica mixture with a proportion of 50-80% by weight talc in said talc-mica mixture, the talc having respectively the following grain distribution:
    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
    in each case of a corresponding spherical diameter.

7. Pigment mixture according to one or more of the preceding claims,
    characterized in that it consists of 53% by weight calcium carbonate and/or dolomite and 47% by weight talc or 47% by weight of a talc-kaolin mixture with a proportion of 50-80% by weight talc in said talc-kaolin mixture or 47% by weight of a talc-mica mixture with a proportion of 50-80% by weight talc in said talc-mica mixture, the talc having respectively the following grain distribution:
    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
    in each case of a corresponding spherical diameter.

8. Pigment mixture according to one or more of the preceding claims,
    characterized in that it consists of 45% by weight calcium carbonate and/or dolomite and 55% by

21

weight talc or 55% by weight of a talc-kaolin mixture with a proportion of 50-80% by weight talc in said talc-kaolin mixture or 55% by weight of a talc-mica mixture with a proportion of 50-80% by weight talc in said talc-mica mixture, the talc having respectively the following grain distribution:

    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
in each case of a corresponding spherical diameter.

9. Pigment mixture according to one or more of the preceding claims, characterized in that it consists of 50% by weight calcium carbonate and/or dolomite and 50% by weight talc or 50% by weight of a talc-kaolin mixture with a proportion of 50-80% by weight talc in said talc-kaolin mixture or 50% by weight of a talc-mica mixture with a proportion of 50-80% by weight talc in said talc-mica mixture, the talc having respectively the following grain distribution:

    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
in each case of a corresponding spherical diameter.

10. Pigment mixture according to one or more of the preceding claims, characterized in that the calcium carbonate or the dolomite has the following grain distribution:

    a) 97-100% of particles < 10 $\mu$m
    b) 85-92% of particles < 2 $\mu$m
    c) 45-65% of particles < 1 $\mu$m
    d) 7-12% of particles < 0.2 $\mu$m
in each case of a corresponding spherical diameter.

11. Pigment mixture according to one or more of the preceding claims, characterized in that it consists of
50-60% by weight calcium carbonate or dolomite
20-30% by weight talc and
20-30% by weight kaolin.

12. Pigment mixture according to one or more of the preceding claims, characterized in that it consists of
50% by weight calcium carbonate or dolomite
25% by weight talc and
25% by weight kaolin.

13. Pigment mixture according to one or more of the preceding claims, characterized in that the mica has the following grain distribution:

    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
in each case of a corresponding spherical diameter.

14. Pigment mixture according to one or more of the preceding claims, characterized in that the talc has the following grain distribution:

    a) 98-100% of particles < 20 $\mu$m
    b) 40-58% of particles < 2 $\mu$m
    c) 20-34% of particles < 1 $\mu$m
    d) 0.1-5% of particles < 0.2 $\mu$m
in each case of a corresponding spherical diameter.

15. Pigment mixture according to one or more of the preceding claims, characterized in that the talc has the following grain distribution:

a) 98% of particles < 20 $\mu$m
b) 50% of particles < 2 $\mu$m
c) 25% of particles < 1 $\mu$m
d) 2% of particles < 0.2 $\mu$m
in each case of a corresponding spherical diameter.

16. Pigment mixture according to one or more of the preceding claims,
    characterized in that the kaolin has the following grain distribution:
        a) 90-100% of particles < 20 $\mu$m
        b) 20-93% of particles < 2 $\mu$m
        c) 10-60% of particles < 1 $\mu$m
        d) 0.1-10% of particles < 0.2 $\mu$m
    in each case of a corresponding spherical diameter.

17. Pigment mixture according to one or more of the preceding claims,
    characterized in that the kaolin has the following grain distribution:
        a) 95-100% of particles < 20 $\mu$m
        b) 55-85% of particles < 2 $\mu$m
        c) 30-54% of particles < 1 $\mu$m d) 2-7% of particles < 0.2 $\mu$m
    in each case of a corresponding spherical diameter.

18. Pigment mixture according to one or more of the preceding claims,
    characterized in that the specific surface area according to BET of the calcium carbonate or the
    dolomite is 10 m$^2$/g.

19. Pigment mixture according to one or more of the preceding claims,
    characterized in that the specific surface area according to BET of the talc or kaolin or mica is 12 m$^2$/g.

20. Pigment mixture according to one or more of the preceding claims,
    characterized in that it additionally contains 0.5-1.5% by weight wetting agent with respect to the
    content of talc or talc-kaolin mixture or talc-mica mixture.

21. Pigment mixture according to one or more of the preceding claims,
    characterized in that it additionally contains 0.1-0.3% by weight dispersing agent with respect to the
    content of talc or talc-kaolin mixture or talc-mica mixture.

22. Pigment mixture according to one or more of the preceding claims,
    characterized in that the calcium carbonate is a natural calcium carbonate.

23. Method for producing a slurry containing the pigment mixture of claims 1 - 22,
    characterized in that the pigments which are in the beginning present in their dry state are mixed in
    that dry state and then dispersed together
    or that the calcium carbonate and/or the dolomite are present in a slurry form and the talc, talc-mica
    mixture or talc-kaolin mixture is present in its dry state and the latter is then admixed into the slurry
    and the pigments are then dispersed together
    or that all pigments are in the beginning present in a slurry form and are then mixed and dispersed.

24. Method for producing a slurry according to claim 23, characterized in that firstly calcium carbonate or
    the dolomite is prepared as 65-75% by weight slurry, then the talc or talc-containing mixture is likewise
    prepared as 65-75% by weight slurry, the latter being dispersed with sodium or ammonium-
    polyacrylate and wetting agents, and then the two pigments are mixed together by means of mixers
    and dispersing units until a solid content of about 75 % by weight is reached, depending on the mixing
    conditions.

25. Use of the pigment mixture according to one or more of claims 1 to 22 for producing a coating
    composition for the paper industry.

**26.** Use of the pigment composition according to claim 25 for producing a coating composition for rotogravure papers, consisting of 40-80% by weight calcium carbonate or dolomite, 20-60% by weight talc or talc-containing mixture and additionally 4-6% by weight binder with respect to the content of the total pigment mixture, 0.1-0.3% by weight dispersing agent with respect to the content of talc or talc-containing mixture, 0.5-1.5% by weight wetting agent with respect to the content of talc or talc-containing mixture, 0.1-1.2% by weight Na or Ca-stearate with respect to the content of the total pigment mixture and an amount of water such that a solid content of 50 to 65% by weight is present.

**27.** Use of the pigment mixture according to claim 25 or 26 for producing a coating composition for lightweight coated rotogravure papers (LWC).

**28.** Use of the pigment mixture according to one or more of claims 25 - 27 for producing lightweight coated rotogravure papers (LWC) at high application speed (up to 1500m/minute).

**29.** Use of the pigment mixture according to claim 25 for producing roll offset papers.

**30.** Use of the pigment mixture according to claim 29 for producing lightweight coated roll offset papers (LWC roll offset papers).

**31.** Use of the pigment mixture according to one or more of claims 1 to 22 in paints, lacquers and plastics.

**32.** Coating composition for rotogravure papers containing a pigment mixture according to one or more of claims 1 - 22, consisting of 40-80% by weight calcium carbonate or dolomite, 20-60% by weight talc or talc-containing mixture and additionally 4-6% by weight binder with respect to the content of the total pigment mixture, 0.1-0.3% by weight dispersing agent with respect to the content of talc or talc-containing mixture, 0.5-1.5% by weight wetting agent with respect to the content of talc or talc-containing mixture, 0.1-1.2% by weight Na or Ca-stearate with respect to the content of the total pigment mixture and an amount of water such that a solid content of 50 to 65% by weight is present.

**Claims for the following Contracting State : ES**

**1.** A method for preparing a calcium carbonate and talc containing pigment mixture, prepared by mixing of 40-80 % by weight calcium carbonate and/or dolomite and 20-60% by weight talc or 20-60% by weight of talc-kaolin mixture with a proportion of 50-80% by weight talc in said talc-kaolin mixture or 20-60% by weight of a talc-mica mixture with a proportion of 50-80% by weight talc in said talc-mica mixture, the talc having respectively the following grain distribution:
    a) 98-100% of particles < 20 $\mu$m
    b) 25-70% of particles < 2 $\mu$m
    c) 12-40% of particles < 1 $\mu$m
    d) 0.1-12% of particles < 0.2 $\mu$m
in each case of a corresponding spherical diameter.

**2.** A method according to claim 1, characterized in that the calcium carbonate or the dolomite has the following grain distribution:
    a) 95-100% of particles < 10 $\mu$m
    b) 60-98% of particles < 2 $\mu$m
    c) 15-80% of particles < 1 $\mu$m
    d) 0.1-20% of particles < 0.2 $\mu$m
in each case of a corresponding spherical diameter.

**3.** A method according to claim 1 or 2,
characterized in that the specific surface area according to BET of the calcium carbonate or the dolomite lies in the range from 3-18 $m^2$/g.

**4.** A method according to one or more of the preceding claims,
characterized in that the specific surface area according to BET of the talc or kaolin or mica lies in the range from 5-16 $m^2$/g.

**5.** A method according to one or more of the preceding claims,
characterized in that it is prepared of 80% by weight calcium carbonate and/or dolomite and 20% by weight talc.

**6.** A method according to one or more of the preceding claims,
characterized in that it is prepared of 50-60% by weight calcium carbonate and/or dolomite and 40-50% by weight talc or 40-50% by weight of a talc-kaolin mixture with a proportion of 50-80% by weight talc in said talc-kaolin mixture or 40-50% by weight of a talc-mica mixture with a proportion of 50-80% by weight talc in said talc-mica mixture, the talc having respectively the following grain distribution:
a) 98-100% of particles < 20 $\mu$m
b) 25-70% of particles < 2 $\mu$m
c) 12-40% of particles < 1 $\mu$m
d) 0.1-12% of particles < 0.2 $\mu$m
in each case of a corresponding spherical diameter.

**7.** A method according to one or more of the preceding claims,
characterized in that it is prepared of 53% by weight calcium carbonate and/or dolomite and 47% by weight talc or 47% by weight of a talc-kaolin mixture with a proportion of 50-80% by weight talc in said talc-kaolin mixture or 47% by weight of a talc-mica mixture with a proportion of 50-80% by weight talc in said talc-mica mixture, the talc having respectively the following grain distribution:
a) 98-100% of particles < 20 $\mu$m
b) 25-70% of particles < 2 $\mu$m
c) 12-40% of particles < 1 $\mu$m
d) 0.1-12% of particles < 0.2 $\mu$m
in each case of a corresponding spherical diameter.

**8.** A method according to one or more of the preceding claims,
characterized in that it is prepared of 45% by weight calcium carbonate and/or dolomite and 55% by weight talc or 55% by weight of a talc-kaolin mixture with a proportion of 50-80% by weight talc in said talc-kaolin mixture or 55% by weight of a talc-mica mixture with a proportion of 50-80% by weight talc in said talc-mica mixture, the talc having respectively the following grain distribution:
a) 98-100% of particles < 20 $\mu$m
b) 25-70% of particles < 2 $\mu$m
c) 12-40% of particles < 1 $\mu$m
d) 0.1-12% of particles < 0.2 $\mu$m
in each case of a corresponding spherical diameter.

**9.** A method according to one or more of the preceding claims,
characterized in that it is prepared of 50% by weight calcium carbonate and/or dolomite and 50% by weight talc or 50% by weight of a talc-kaolin mixture with a proportion of 50-80% by weight talc in said talc-kaolin mixture or 50% by weight of a talc-mica mixture with a proportion of 50-80% by weight talc in said talc-mica mixture, the talc having respectively the following grain distribution:
a) 98-100% of particles < 20 $\mu$m
b) 25-70% of particles < 2 $\mu$m
c) 12-40% of particles < 1 $\mu$m
d) 0.1-12% of particles < 0.2 $\mu$m
in each case of a corresponding spherical diameter.

**10.** A method according to one or more of the preceding claims,
characterized in that the calcium carbonate or the dolomite has the following grain distribution:
a) 97-100% of particles < 10 $\mu$m
b) 85-92% of particles < 2 $\mu$m
c) 45-65% of particles < 1 $\mu$m
d) 7-12% of particles < 0.2 $\mu$m
in each case of a corresponding spherical diameter.

**11.** A method according to one or more of the preceding claims,
characterized in that it consists of

50-60% by weight calcium carbonate or dolomite
20-30% by weight talc and
20-30% by weight kaolin.

**12.** A method according to one or more of the preceding claims,
characterized in that it consists of
50% by weight calcium carbonate or dolomite
25% by weight talc and
25% by weight kaolin.

**13.** A method according to one or more of the preceding claims,
characterized in that the mica has the following grain distribution:
 a) 98-100% of particles < 20 $\mu$m
 b) 25-70% of particles < 2 $\mu$m
 c) 12-40% of particles < 1 $\mu$m
 d) 0.1-12% of particles < 0.2 $\mu$m
in each case of a corresponding spherical diameter.

**14.** A method according to one or more of the preceding claims,
characterized in that the talc has the following grain distribution:
 a) 98-100% of particles < 20 $\mu$m
 b) 40-58% of particles < 2 $\mu$m
 c) 20-34% of particles < 1 $\mu$m
 d) 0.1-5% of particles < 0.2 $\mu$m
in each case of a corresponding spherical diameter.

**15.** A method according to one or more of the preceding claims,
characterized in that the talc has the following grain distribution:
 a) 98% of particles < 20 $\mu$m
 b) 50% of particles < 2 $\mu$m
 c) 25% of particles < 1 $\mu$m
 d) 2% of particles < 0.2 $\mu$m
in each case of a corresponding spherical diameter.

**16.** A method according to one or more of the preceding claims,
characterized in that the kaolin has the following grain distribution:
 a) 90-100% of particles < 20 $\mu$m
 b) 20-93% of particles < 2 $\mu$m
 c) 10-60% of particles < 1 $\mu$m
 d) 0.1-10% of particles < 0.2 $\mu$m
in each case of a corresponding spherical diameter.

**17.** A method according to one or more of the preceding claims,
characterized in that the kaolin has the following grain distribution:
 a) 95-100% of particles < 20 $\mu$m
 b) 55-85% of particles < 2 $\mu$m
 c) 30-54% of particles < 1 $\mu$m
 d) 2-7% of particles < 0.2 $\mu$m
in each case of a corresponding spherical diameter.

**18.** A method according to one or more of the preceding claims,
characterized in that the specific surface area according to BET of the calcium carbonate or the
dolomite is 10 m$^2$/g.

**19.** A method according to one or more of the preceding claims,
characterized in that the specific surface area according to BET of the talc or kaolin or mica is 12 m$^2$/g.

26

**20.** A method according to one or more of the preceding claims, characterized in that additionally 0.5-1.5% by weight wetting agent with respect to the content of talc or talc-kaolin mixture or talc-mica mixture are admixed.

**21.** A method according to one or more of the preceding claims, characterized in that additionally 0.1-0.3% by weight dispersing agent with respect to the content of talc or talc-kaolin mixture or talc-mica mixture are admixed.

**22.** A method according to one or more of the preceding claims, characterized in that the calcium carbonate is a natural calcium carbonate.

**23.** A method for producing a slurry containing the pigment mixture of claims 1 - 22, characterized in that the pigments which are in the beginning present in their dry state are mixed in that dry state and then dispersed together or that the calcium carbonate and/or the dolomite are present in a slurry form and the talc, talc-mica mixture or talc-kaolin mixture is present in its dry state and the latter is then admixed into the slurry and the pigments are then dispersed together or that all pigments are in the beginning present in a slurry form and are then mixed and dispersed.

**24.** A method for producing a slurry according to claim 23, characterized in that firstly calcium carbonate or the dolomite is prepared as 65-75% by weight slurry, then the talc or talc-containing mixture is likewise prepared as 65-75% by weight slurry, the latter being dispersed with sodium or ammonium-polyacrylate and wetting agents, and then the two pigments are mixed together by means of mixers and dispersing units until a solid content of about 75 % by weight is reached, depending on the mixing conditions.

**25.** Use of the pigment mixture according to one or more of claims 1 to 22 for producing a coating composition for the paper industry.

**26.** Use of the pigment mixture according to claim 25 for producing a coating composition for rotogravure papers, consisting of 40-80% by weight calcium carbonate or dolomite, 20-60% by weight talc or talc-containing mixture and additionally 4-6% by weight binder with respect to the content of the total pigment mixture, 0.1-0.3% by weight dispersing agent with respect to the content of talc or talc-containing mixture, 0.5-1.5% by weight wetting agent with respect to the content of talc or talc-containing mixture, 0.1-1.2% by weight Na or Ca-stearate with respect to the content of the total pigment mixture and an amount of water such that a solid content of 50 to 65% by weight is present.

**27.** Use of the pigment mixture according to claim 25 or 26 for producing a coating composition for lightweight coated rotogravure papers (LWC).

**28.** Use of the pigment mixture according to one or more of claims 25 - 27 for producing lightweight coated rotogravure papers (LWC) at high application speed (up to 1500m/minute).

**29.** Use of the pigment mixture according to claim 25 for producing roll offset papers.

**30.** Use of the pigment mixture according to claim 29 for producing lightweight coated roll offset papers (LWC roll offset papers).

**31.** Use of the pigment mixture according to one or more of claims 1 to 22 in paints, lacquers and plastics.

**Revendications**
**Revendications pour les Etats contractants suivants : AT, BE, CH, DE, FR, GB, GR, IT, LI, LU, NL, SE**

**1.** Mélange de pigments, contenant du carbonate de calcium et du talc, caractérisé en ce qu'il est constitué, d'une part, de 40-80 % en poids de carbonate de calcium et/ou de dolomite et, d'autre part, de 20-60 % en poids de talc, ou de 20-60 % en poids d'un mélange talc-kaolin contenant une proportion de 50-80 % en poids de talc dans ce mélange talc-kaolin, ou de 20-60 % en poids d'un mélange talc-mica contenant une proportion de 50-80 % en poids de talc dans

EP 0 332 102 B1

ce mélange talc-mica, tandis que, dans chaque cas, le talc a la distribution granulométrique suivante :
a) 98-100 % de particules < 20 $\mu$m
b) 25-70 % de particules < 2 $\mu$m
c) 12-40 % de particules < 1 $\mu$m
d) 0,1-12 % de particules < 0,2 $\mu$m,
ces particules ayant dans chaque cas une forme sphérique d'un diamètre convenable.

2. Mélange de pigments selon la revendication 1, caractérisé en ce que le carbonate de calcium ou la dolomite a la distribution granulométrique suivante :
a) 95-100 % de particules < 10 $\mu$m
b) 60-98 % de particules < 2 $\mu$m
c) 15-80 % de particules < 1 $\mu$m
d) 0,1-20 % de particules < 0,2 $\mu$m,
ces particules ayant dans chaque cas une forme sphérique d'un diamètre convenable.

3. Mélange de pigments selon l'une des revendications 1 et 2, caractérisé en ce que la surface spécifique B.E.T. du carbonate de calcium ou de la dolomite est comprise entre 3 et 18 m$^2$/g.

4. Mélange de pigments selon une ou plusieurs des revendications précédentes, caractérisé en ce que la surface spécifique B.E.T. du talc, du kaolin ou du mica est comprise entre 5 et 16 m$^2$/g.

5. Mélange de pigments selon une ou plusieurs des revendications précédentes, caractérisé en ce qu'il est constitué de 80 % en poids de carbonate de calcium et/ou de dolomite et de 20 % en poids de talc.

6. Mélange de pigments selon une ou plusieurs des revendications précédentes, caractérisé en ce qu'il est constitué, d'une part, de 50-60 % en poids de carbonate de calcium et/ou de dolomite et, d'autre part, de 40-50 % en poids de talc, ou de 40-50 % en poids d'un mélange talc-kaolin contenant une proportion de 50-80 % en poids de talc dans ce mélange talc-kaolin, ou de 40-50 % en poids d'un mélange talc-mica contenant une proportion de 50-80 % en poids de talc dans ce mélange talc-mica, tandis que, dans chaque cas, le talc a la distribution granulométrique suivante :
a) 98-100 % de particules < 20 $\mu$m
b) 25-70 % de particules < 2 $\mu$m
c) 12-40 % de particules < 1 $\mu$m
d) 0,1-12 % de particules < 0.2 $\mu$m,
ces particules ayant dans chaque cas une forme sphérique d'un diamètre convenable.

7. Mélange de pigments selon une ou plusieurs des revendications précédentes, caractérisé en ce qu'il est constitué, d'une part, de 53 % en poids de carbonate de calcium et/ou de dolomite et, d'autre part, de 47 % en poids de talc, ou de 47 % en poids d'un mélange talc-kaolin contenant une proportion de 50-80 % en poids de talc dans ce mélange talc-kaolin, ou de 47 % en poids d'un mélange talc-mica contenant une proportion de 50-80 % en poids de talc dans ce mélange talc-mica, tandis que, dans chaque cas, le talc a la distribution granulométrique suivante :
a) 98-100 % de particules < 20 $\mu$m
b) 25-70 % de particules < 2 $\mu$m
c) 12-40 % de particules < 1 $\mu$m
d) 0,1-12 % de particules < 0,2 $\mu$m,
ces particules ayant dans chaque cas une forme sphérique d'un diamètre convenable.

8. Mélange de pigments selon une ou plusieurs des revendications précédentes, caractérisé en ce qu'il est constitué, d'une part, de 45 % en poids de carbonate de calcium et/ou de dolomite et, d'autre part, de 55 % en poids de talc, ou de 55 % en poids d'un mélange talc-kaolin contenant une proportion de 50-80 % en poids de talc dans ce mélange talc-kaolin, ou de 55 % en poids d'un mélange talc-mica contenant une proportion de 50-80 % en poids de talc dans ce mélange talc-mica, tandis que, dans chaque cas, le talc a la distribution granulométrique suivante :
a) 98-100 % de particules < 20 $\mu$m
b) 25-70 % de particules < 2 $\mu$m
c) 12-40 % de particules < 1 $\mu$m

28

d) 0,1-12 % de particules < 0,2 $\mu$m,

ces particules ayant dans chaque cas une forme sphérique d'un diamètre convenable.

9. Mélange de pigments selon une ou plusieurs des revendications précédentes, caractérisé en ce qu'il est constitué, d'une part, de 50 % en poids de carbonate de calcium et/ou de dolomite et, d'autre part, de 50 % en poids de talc, ou de 50 % en poids d'un mélange talc-kaolin contenant une proportion de 50-80 % en poids de talc dans ce mélange talc-kaolin, ou de 50 % en poids d'un mélange talc-mica contenant une proportion de 50-80 % en poids de talc dans ce mélange talc-mica, tandis que, dans chaque cas, le talc a la distribution granulométrique suivante :

a) 98-100 % de particules < 20 $\mu$m

b) 25-70 % de particules < 2 $\mu$m

c) 12-40 % de particules < 1 $\mu$m

d) 0,1-12 % de particules < 0,2 $\mu$m,

ces particules ayant dans chaque cas une forme sphérique d'un diamètre convenable.

10. Mélange de pigments selon une ou plusieurs des revendications précédentes, caractérisé en ce que le carbonate de calcium ou la dolomite a la distribution granulométrique suivante :

a) 97-100 % de particules < 10 $\mu$m

b) 85-92 % de particules < 2 $\mu$m

c) 45-65 % de particules < 1 $\mu$m

d) 7-12 % de particules < 0,2 $\mu$m,

ces particules ayant dans chaque cas une forme sphérique d'un diamètre convenable.

11. Mélange de pigments selon une ou plusieurs des revendications précédentes, caractérisé en ce qu'il est constitué de

50-60 % en poids de carbonate de calcium ou de dolomite,

20-30 % en poids de talc et

20-30 % en poids de kaolin.

12. Mélange de pigments selon une ou plusieurs des revendications précédentes, caractérisé en ce qu'il est constitué de

50 % en poids de carbonate de calcium ou de dolomite,

25 % en poids de talc et

25 % en poids de kaolin.

13. Mélange de pigments selon une ou plusieurs des revendications précédentes, caractérisé en ce que le mica a la distribution granulométrique suivante :

a) 98-100 % de particules < 20 $\mu$m

b) 25-70 % de particules < 2 $\mu$m

c) 12-40 % de particules < 1 $\mu$m

d) 0,1-12 % de particules < 0,2 $\mu$m,

ces particules ayant dans chaque cas une forme sphérique d'un diamètre convenable.

14. Mélange de pigments selon une ou plusieurs des revendications précédentes, caractérisé en ce que le talc a la distribution granulométrique suivante :

a) 98-100 % de particules < 20 $\mu$m

b) 40-58 % de particules < 2 $\mu$m

c) 20-34 % de particules < 1 $\mu$m

d) 0,1-5 % de particules < 0,2 $\mu$m,

ces particules ayant dans chaque cas une forme sphérique d'un diamètre convenable.

15. Mélange de pigments selon une ou plusieurs des revendications précédentes, caractérisé en ce que le talc a la distribution granulométrique suivante :

a) 98 % de particules < 20 $\mu$m

b) 50 % de particules < 2 $\mu$m

c) 25 % de particules < 1 $\mu$m

d) 2 % de particules < 0,2 $\mu$m,

ces particules ayant dans chaque cas une forme sphérique d'un diamètre convenable.

**16.** Mélange de pigments selon une ou plusieurs des revendications précédentes, caractérisé en ce que le kaolin a la distribution granulométrique suivante :

    a) 90-100 % de particules < 20 $\mu$m

    b) 20-93 % de particules < 2 $\mu$m

    c) 10-60 % de particules < 1 $\mu$m

    d) 0,1-10 % de particules < 0,2 $\mu$m,

ces particules ayant dans chaque cas une forme sphérique d'un diamètre convenable.

**17.** Mélange de pigments selon une ou plusieurs des revendications précédentes, caractérisé en ce que le kaolin a la distribution granulométrique suivante :

    a) 95-100 % de particules < 20 $\mu$m

    b) 55-85 % de particules < 2 $\mu$m

    c) 30-54 % de particules < 1 $\mu$m

    d) 2-7 % de particules < 0,2 $\mu$m,

ces particules ayant dans chaque cas une forme sphérique d'un diamètre convenable.

**18.** Mélange de pigments selon une ou plusieurs des revendications précédentes, caractérisé en ce que la surface spécifique B.E.T. du carbonate de calcium ou de la dolomite est égale à 10 m$^2$/g.

**19.** Mélange de pigments selon une ou plusieurs des revendications précédentes, caractérisé en ce que la surface spécifique B.E.T. du talc, du kaolin ou du mica est égale à 12 m$^2$/g.

**20.** Mélange de pigments selon une ou plusieurs des revendications précédentes, caractérisé en ce qu'il contient en sus 0,5-1,5 % en poids d'agent mouillant, rapporté à la teneur en talc, en mélange talc-kaolin ou en mélange talc-mica.

**21.** Mélange de pigments selon une ou plusieurs des revendications précédentes, caractérisé en ce qu'il contient en sus 0,1-0,3 % en poids d'agent dispersant, rapporté à la teneur en talc, en mélange talc-kaolin ou en mélange talc-mica.

**22.** Mélange de pigments selon une ou plusieurs des revendications précédentes, caractérisé en ce que le carbonate de calcium est un carbonate de calcium naturel.

**23.** Procédé de préparation d'une suspension contenant un mélange de pigments selon l'une des revendications 1 à 22, caractérisé en ce que les pigments sont d'abord présents d'une manière séparée à l'état sec, on les mélange à l'état sec, puis on les disperse ensemble,

    ou en ce que le carbonate de calcium et/ou la dolomite sont présents sous forme de suspension et le talc, le mélange talc-mica ou le mélange talc-kaolin est présent à l'état sec, puis on mélange ce talc ou ce mélange en l'introduisant dans la suspension et on disperse ensuite ensemble les pigments

    ou en ce que tous les pigments sont d'abord présents d'une manière séparée à l'état de suspension, puis on les mélange et les disperse ensuite.

**24.** Procédé de préparation d'une suspension selon la revendication 23, caractérisé en ce qu'on prépare d'abord le carbonate de calcium ou la dolomite sous la forme d'une suspension à 65-75 % en poids, puis on prépare aussi le talc ou le mélange contenant du talc, sous la forme d'une suspension à 65-75 % en poids, ce talc ou ce mélange étant dispersé au moyen d'un polyacrylate de sodium ou d'ammonium et d'agents mouillants, puis on mélange entre eux les deux pigments au moyen d'appareils de mélange et d'ensembles de dispersion, jusqu'à ce qu'on obtienne une teneur en matières solides égale à 75 % en poids environ, en fonction des rapports de mélange.

**25.** Utilisation d'un mélange de pigments selon une ou plusieurs des revendications 1 à 22 pour la préparation d'une masse de couchage pour l'industrie du papier.

**26.** Utilisation d'un mélange de pigments selon la revendication 25 pour la préparation d'une masse de couchage pour des papiers hélio, comprenant 40-80 % en poids de carbonate de calcium ou de dolomite, 20-60 % en poids de talc ou d'un mélange contenant du talc et, en sus, 4-6 % en poids de liant, rapportés à la teneur du mélange de pigments total, 0,1-0,3 % en poids d'agent dispersant, rapporté à la teneur en talc ou en mélange contenant du talc, 0,5-1,5 % en poids d'agent mouillant, rapporté à la teneur en talc ou en mélange contenant du talc, 0,1-1,2 % en poids de stéarate de Na ou de Ca, rapporté à la teneur du mélange de pigments total, et une quantité d'eau suffisante pour qu'il se présente une teneur en matières solides comprise entre 50 et 65 % en poids.

**27.** Utilisation d'un mélange de pigments selon l'une des revendications 25 et 26 pour la préparation d'une masse de couchage pour des papiers couchés légers hélio (LWC).

**28.** Utilisation d'un mélange de pigments selon une ou plusieurs des revendications 25 à 27 pour la préparation de papiers couchés légers hélio (LWC) dans le cas d'une vitesse élevée d'enduction (jusqu'à 1 500 m/minute).

**29.** Utilisation d'un mélange de pigments selon la revendication 25 pour la préparation de papiers pour rotative offset.

**30.** Utilisation d'un mélange de pigments selon la revendication 29 pour la préparation de papiers couchés légers pour rotative offset (papiers LWC pour rotative offset).

**31.** Utilisation d'un mélange de pigments selon une ou plusieurs des revendications 1 à 22 dans des peintures et vernis et dans des matières plastiques.

**32.** Masse de couchage, pour papiers hélio, contenant un mélange de pigments selon une ou plusieurs des revendications 1 à 22, comprenant 40-80 % en poids de carbonate de calcium ou de dolomite, 20-60 % en poids de talc ou d'un mélange contenant du talc et, en sus, 4-6 % en poids de liant, rapportés à la teneur du mélange de pigments total, 0,1-0,3 % en poids d'agent dispersant, rapporté à la teneur en talc ou en mélange contenant du talc, 0,5-1,5 % en poids d'agent mouillant, rapporté à la teneur en talc ou en mélange contenant du talc, 0,1-1,2 % en poids de stéarate de Na ou de Ca, rapporté à la teneur du mélange de pigments total, et une quantité d'eau suffisante pour qu'il se présente une teneur en matières solides comprise entre 50 et 65 % en poids.

**Revendications pour l'Etat contractant suivant : ES**

**1.** Procédé de préparation d'un mélange de pigments contenant du carbonate de calcium et du talc, préparé par mélange, d'une part, de 40-80 % en poids de carbonate de calcium et/ou de dolomite et, d'autre part, de 20-60 % en poids de talc, ou de 20-60 % en poids d'un mélange talc-kaolin contenant une proportion de 50-80 % en poids de talc dans ce mélange talc-kaolin, ou de 20-60 % en poids d'un mélange talc-mica contenant une proportion de 50-80 % en poids de talc dans ce mélange talc-mica, tandis que, dans chaque cas, le talc a la distribution granulométrique suivante :
a) 98-100 % de particules < 20 $\mu$m
b) 25-70 % de particules < 2 $\mu$m
c) 12-40 % de particules < 1 $\mu$m
d) 0,1-12 % de particules < 0,2 $\mu$m,
ces particules ayant dans chaque cas une forme sphérique d'un diamètre convenable.

**2.** Procédé selon la revendication 1, caractérisé en ce que le carbonate de calcium ou la dolomite a la distribution granulométrique suivante :
a) 95-100 % de particules < 10 $\mu$m
b) 60-98 % de particules < 2 $\mu$m
c) 15-80 % de particules < 1 $\mu$m
d) 0,1-20 % de particules < 0,2 $\mu$m,
ces particules ayant dans chaque cas une forme sphérique d'un diamètre convenable.

**3.** Procédé selon l'une des revendications 1 et 2, caractérisé en ce que la surface spécifique B.E.T. du carbonate de calcium ou de la dolomite est comprise entre 3 et 18 m$^2$/g.

**4.** Procédé selon une ou plusieurs des revendications précédentes, caractérisé en ce que la surface spécifique B.E.T. du talc, du kaolin ou du mica est comprise entre 5 et 16 m$^2$/g.

31

5. Procédé selon une ou plusieurs des revendications précédentes, caractérisé en ce que le mélange est préparé à partir de 80 % en poids de carbonate de calcium et/ou de dolomite et de 20 % en poids de talc.

6. Procédé selon une ou plusieurs des revendications précédentes. caractérisé en ce que le mélange est préparé à partir, d'une part, de 50-60 % en poids de carbonate de calcium et/ou de dolomite et, d'autre part, de 40-50 % en poids de talc, ou de 40-50 % en poids d'un mélange talc-kaolin contenant une proportion de 50-80 % en poids de talc dans ce mélange talc-kaolin, ou de 40-50 % en poids d'un mélange talc-mica contenant une proportion de 50-80 % en poids de talc dans ce mélange talc-mica, tandis que, dans chaque cas, le talc a la distribution granulométrique suivante :
   a) 98-100 % de particules < 20 $\mu$m
   b) 25-70 % de particules < 2 $\mu$m
   c) 12-40 % de particules < 1 $\mu$m
   d) 0,1-12 % de particules < 0,2 $\mu$m,
   ces particules ayant dans chaque cas une forme sphérique d'un diamètre convenable.

7. Procédé selon une ou plusieurs des revendications précédentes, caractérisé en ce que le mélange est préparé à partir, d'une part, de 53 % en poids de carbonate de calcium et/ou de dolomite et, d'autre part, de 47 % en poids de talc, ou de 47 % en poids d'un mélange talc-kaolin contenant une proportion de 50-80 % en poids de talc dans ce mélange talc-kaolin, ou de 47 % en poids d'un mélange talc-mica contenant une proportion de 50-80 % en poids de talc dans ce mélange talc-mica, tandis que, dans chaque cas, le talc a la distribution granulométrique suivante :
   a) 98-100 % de particules < 20 $\mu$m
   b) 25-70 % de particules < 2 $\mu$m
   c) 12-40 % de particules < 1 $\mu$m
   d) 0,1-12 % de particules < 0.2 $\mu$m,
   ces particules ayant dans chaque cas une forme sphérique d'un diamètre convenable.

8. Procédé selon une ou plusieurs des revendications précédentes, caractérisé en ce que le mélange est préparé à partir, d'une part, de 45 % en poids de carbonate de calcium et/ou de dolomite et, d'autre part, de 55 % en poids de talc, ou de 55 % en poids d'un mélange talc-kaolin contenant une proportion de 50-80 % en poids de talc dans ce mélange talc-kaolin, ou de 55 % en poids d'un mélange talc-mica contenant une proportion de 50-80 % en poids de talc dans ce mélange talc-mica, tandis que, dans chaque cas, le talc a la distribution granulométrique suivante :
   a) 98-100 % de particules < 20 $\mu$m
   b) 25-70 % de particules < 2 $\mu$m
   c) 12-40 % de particules < 1 $\mu$m
   d) 0,1-12 % de particules < 0,2 $\mu$m,
   ces particules ayant dans chaque cas une forme sphérique d'un diamètre convenable.

9. Procédé selon une ou plusieurs des revendications précédentes, caractérisé en ce que le mélange est préparé à partir, d'une part, de 50 % en poids de carbonate de calcium et/ou de dolomite et, d'autre part, de 50 % en poids de talc, ou de 50 % en poids d'un mélange talc-kaolin contenant une proportion de 50-80 % en poids de talc dans ce mélange talc-kaolin, ou de 50 % en poids d'un mélange talc-mica contenant une proportion de 50-80 % en poids de talc dans ce mélange talc-mica, tandis que, dans chaque cas, le talc a la distribution granulométrique suivante :
   a) 98-100 % de particules < 20 $\mu$m
   b) 25-70 % de particules < 2 $\mu$m
   c) 12-40 % de particules < 1 $\mu$m
   d) 0,1-12 % de particules < 0,2 $\mu$m,
   ces particules ayant dans chaque cas une forme sphérique d'un diamètre convenable.

10. Procédé selon une ou plusieurs des revendications précédentes, caractérisé en ce que le carbonate de calcium ou la dolomite a la distribution granulométrique suivante :
   a) 97-100 % de particules < 10 $\mu$m
   b) 85-92 % de particules < 2 $\mu$m
   c) 45-65 % de particules < 1 $\mu$m

d) 7-12 % de particules < 0,2 $\mu$m,
ces particules ayant dans chaque cas une forme sphérique d'un diamètre convenable.

11. Procédé selon une ou plusieurs des revendications précédentes, caractérisé en ce que le mélange est préparé à partir de
   50-60 % en poids de carbonate de calcium ou de dolomite,
   20-30 % en poids de talc et
   20-30 % en poids de kaolin.

12. Procédé selon une ou plusieurs des revendications précédentes, caractérisé en ce que le mélange est préparé à partir de
   50 % en poids de carbonate de calcium ou de dolomite,
   25 % en poids de talc et
   25 % en poids de kaolin.

13. Procédé selon une ou plusieurs des revendications précédentes, caractérisé en ce que le mica a la distribution granulométrique suivante :
   a) 98-100 % de particules < 20 $\mu$m
   b) 25-70 % de particules < 2 $\mu$m
   c) 12-40 % de particules < 1 $\mu$m
   d) 0,1-12 % de particules < 0,2 $\mu$m,
   ces particules ayant dans chaque cas une forme sphérique d'un diamètre convenable.

14. Procédé selon une ou plusieurs des revendications précédentes, caractérisé en ce que le talc a la distribution granulométrique suivante :
   a) 98-100 % de particules < 20 $\mu$m
   b) 40-58 % de particules < 2 $\mu$m
   c) 20-34 % de particules < 1 $\mu$m
   d) 0,1-5 % de particules < 0,2 $\mu$m,
   ces particules ayant dans chaque cas une forme sphérique d'un diamètre convenable.

15. Procédé selon une ou plusieurs des revendications précédentes, caractérisé en ce que le talc a la distribution granulométrique suivante :
   a) 98 % de particules < 20 $\mu$m
   b) 50 % de particules < 2 $\mu$m
   c) 25 % de particules < 1 $\mu$m
   d) 2 % de particules < 0,2 $\mu$m,
   ces particules ayant dans chaque cas une forme sphérique d'un diamètre convenable.

16. Procédé selon une ou plusieurs des revendications précédentes, caractérisé en ce que le kaolin a la distribution granulométrique suivante :
   a) 90-100 % de particules < 20 $\mu$m
   b) 20-93 % de particules < 2 $\mu$m
   c) 10-60 % de particules < 1 $\mu$m
   d) 0,1-10 % de particules < 0,2 $\mu$m,
   ces particules ayant dans chaque cas une forme sphérique d'un diamètre convenable.

17. Procédé selon une ou plusieurs des revendications précédentes, caractérisé en ce que le kaolin a la distribution granulométrique suivante :
   a) 95-100 % de particules < 20 $\mu$m
   b) 55-85 % de particules < 2 $\mu$m
   c) 30-54 % de particules < 1 $\mu$m
   d) 2-7 % de particules < 0,2 $\mu$m,
   ces particules ayant dans chaque cas une forme sphérique d'un diamètre convenable.

18. Procédé selon une ou plusieurs des revendications précédentes, caractérisé en ce que la surface spécifique B.E.T. du carbonate de calcium ou de la dolomite est égale à 10 m$^2$/g.

**19.** Procédé selon une ou plusieurs des revendications précédentes, caractérisé en ce que la surface spécifique B.E.T. du talc, du kaolin ou du mica est égale à 12 m²/g.

**20.** Procédé selon une ou plusieurs des revendications précédentes, caractérisé en ce qu'on incorpore en sus 0,5-1,5 % en poids d'agent mouillant, rapporté à la teneur en talc, en mélange talc-kaolin ou en mélange talc-mica.

**21.** Procédé selon une ou plusieurs des revendications précédentes, caractérisé en ce qu'on incorpore en sus 0,1-0,3 % en poids d'agent dispersant, rapporté à la teneur en talc, en mélange talc-kaolin ou en mélange talc-mica.

**22.** Procédé selon une ou plusieurs des revendications précédentes, caractérisé en ce que le carbonate de calcium est un carbonate de calcium naturel.

**23.** Procédé de préparation d'une suspension contenant un mélange de pigments selon l'une des revendications 1 à 22, caractérisé en ce que les pigments sont d'abord présents d'une manière séparée à l'état sec, on les mélange à l'état sec, puis on les disperse ensemble,

ou en ce que le carbonate de calcium et/ou la dolomite sont présents sous forme de suspension et le talc, le mélange talc-mica ou le mélange talc-kaolin est présent à l'état sec, puis on mélange ce talc ou ce mélange en l'introduisant dans la suspension et on disperse ensuite ensemble les pigments

ou en ce que tous les pigments sont d'abord présents d'une manière séparée à l'état de suspension, puis on les mélange et les disperse ensuite.

**24.** Procédé de préparation d'une suspension selon la revendication 23, caractérisé en ce qu'on prépare d'abord le carbonate de calcium ou la dolomite sous la forme d'une suspension à 65-75 % en poids, puis on prépare aussi le talc ou le mélange contenant du talc, sous la forme d'une suspension à 65-75 % en poids, ce talc ou ce mélange étant dispersé au moyen d'un polyacrylate de sodium ou d'ammonium et d'agents mouillants, puis on mélange entre eux les deux pigments au moyen d'appareils de mélange et d'ensembles de dispersion, jusqu'à ce qu'on obtienne une teneur en matières solides égale à 75 % en poids environ, en fonction des rapports de mélange.

**25.** Utilisation d'un mélange de pigments selon une ou plusieurs des revendications 1 à 22 pour la préparation d'une masse de couchage pour l'industrie du papier.

**26.** Utilisation d'un mélange de pigments selon la revendication 25 pour la préparation d'une masse de couchage pour des papiers hélio, comprenant 40-80 % en poids de carbonate de calcium ou de dolomite, 20-60 % en poids de talc ou d'un mélange contenant du talc et, en sus, 4-6 % en poids de liant, rapportés à la teneur du mélange de pigments total, 0,1-0,3 % en poids d'agent dispersant rapporté à la teneur en talc ou en mélange contenant du talc, 0,5-1,5 % en poids d'agent mouillant, rapporté à la teneur en talc ou en mélange contenant du talc, 0,1-1,2 % en poids de stéarate de Na ou de Ca, rapporté à la teneur du mélange de pigments total, et une quantité d'eau suffisante pour qu'il se présente une teneur en matières solides comprise entre 50 et 65 % en poids.

**27.** Utilisation d'un mélange de pigments selon l'une des revendications 25 et 26 pour la préparation d'une masse de couchage pour des papiers couchés légers hélio (LWC).

**28.** Utilisation d'un mélange de pigments selon une ou plusieurs des revendications 25 à 27 pour la préparation de papiers couchés légers hélio (LWC) dans le cas d'une vites'se élevée d'enduction (jusqu'à 1 500 m/minute).

**29.** Utilisation d'un mélange de pigments selon la revendication 25 pour la préparation de papiers pour rotative offset.

**30.** Utilisation d'un mélange de pigments selon la revendication 29 pour la préparation de papiers couchés légers pour rotative offset (papiers LWC pour rotative offset).

**31.** Utilisation d'un mélange de pigments selon une ou plusieurs des revendications 1 à 22 dans des peintures et vernis et dans des matières plastiques.